# EUROPEAN PATENT SPECIFICATION

(11) **EP 0 848 681 B1**
(45) Date of publication and mention of the grant of the patent: **29.05.2002**
(21) Application number: 96931130.7
(22) Date of filing: 23.08.1996
(51) Int. Cl.: B62D 65/00, B23K 37/047

(54) **IMPROVED GATE CHANGE FACILITY**
VERBESSERTE SPANNRAHMEN-WECHSELVORRICHTUNG
INSTALLATION AMELIOREE DE CHANGEMENT DE SUPPORTS

(30) Priority: 07.09.1995 GB 9518293
(43) Date of publication of application: 24.06.1998
(60) Divisional application: 00114927.7
(73) Proprietor: Unova U.K. Limited, Aylesbury, Buckinghamshire HP20 2RQ (GB)
(72) Inventor: SEAL, Martin, Sedgley, Birmingham B43 7LU (GB); KOVAROVIC, Josef, Leicester LE10 2BJ (GB)
(74) Representative: Nash, Keith Wilfrid
(86) International application number: GB9602106
(87) International publication number: WO9709226

(56) References cited:
- EP-A- 0 296 369
- EP-A- 0 526 863
- WO-A-86/03153
- WO-A-92/19486
- DE-A- 3 823 947
- DE-A- 3 914 970
- GB-A- 2 126 174
- GB-A- 2 172 555
- US-A- 4 494 687
- US-A- 5 125 141

## Description

### Field of invention

This invention concerns the apparatus employed in assembling and securing together the panels which make up a motor vehicle body, typically from floor, roof and side panels. In particular the invention concerns the supporting frames (normally referred to as gates) which are located on opposite sides of a framing station for carrying the tooling on which the side panels of the vehicle body can be carried.

### Background to the invention

It is desirable that a framing station should be adaptable to allow different vehicle bodies to be assembled therein. The four panels which make up the body shell are individually delivered to the framing station. The floor panel, usually with the engine compartment integral therewith, is typically moved into position by means of a floor conveyor. The side panels may be lowered or otherwise moved into opposite sides of the framing station and are attached to fixtures comprising some of the tooling on the two gates. To this end the gates have to be tooled appropriately so as to provide clamping devices at an appropriate number of points around each panel to thereby support it in the framing station.

The appropriate roof panel for the side assemblies is merely lowered into position as from a high level conveyor and typically rests on the side panels prior to the welding steps which fabricate the vehicle body as by spot welding the panels together along cooperating edges.

Where different body variants incorporate a common design of floor panel, the different body shapes are achieved by the use of different side panels (and roof panel) which make up the body. To this end the floor panel tooling will often require little if any change from one model to another whereas the tooling on the gates which has to cooperate intimately with each particular side panel design, has to be changed from one model variant to another.

Each of the gates on which a side panel is carried comprises a frame and dedicated tooling adapted to clamp the side panel so that the outside surface of the panel faces the gate, so that it is the inside surface of the panel which faces into the framing station. In order to achieve model changes and or body variation, it has been necessary to replace the whole of the gate with another gate on which appropriate alternative tooling is mounted, and the downtime for the framing station has often been very considerable, certainly many hours have been involved, often running into days.

The loss of production resulting from such down time is considerable and in consequence the ability to make small changes to the side panels either to accommodate new design features or to improve existing designs, quite apart from introducing a new variant, has been severely restricted.

In WO-A-92/19486 there is disclosed a vehicle body framing station with a plurality of racks in which tooling sub-frames are stored. The racks are located adjacent a path which extends generally perpendicularly away from the side of the framing station. A gate support assembly is movable towards and away from the framing station, so that it can receive a tooling gate thereon from one of the racks and be moved into the framing station into a working position, where the tooling can receive a side panel to facilitate the fabrication of a motor vehicle body in the framing station.

It is an object of the present invention to provide a improved tooling gate change facility whereby the storage and transfer of tooling gates can be facilitated.

### Summary of the invention

According to the present invention there is provided a vehicle body framing station comprising plurality of racks on which tooling sub-frames or gates are stored, the racks being located adjacent a path which extends away from the side of the framing station, and a gate support assembly movable along the path towards and away from the framing station, so that it can receive a tooling gate thereon from one of the racks and be moved into the framing station into a working position where the tooling can receive a side panel to facilitate the fabrication of a motor vehicle body in the framing station, characterised in that each rack includes a high level rail, and each tooling gate includes sliding means adapted to engage the high level rail to carry and support the gate thereon and permit lateral movement thereof relative to the rack, movement of the gate support assembly along the path enabling a corresponding rail thereon to be aligned with the rail of one of the racks to enable a tooling gate carried by the latter to be moved onto the support assembly or from the latter onto the rack.

Other features of the invention are defined in the appended claims.

### Brief description of the drawings

The invention will now be described by way of example, with reference to the accompanying drawings, in which:
Figure 1 is a side view of part of a vehicle body fabrication line feeding and leaving a framing station constructed in accordance with the invention;
Figure 2 is a plan view of the line shown in Figure 1 showing gate supports on opposite sides of the framing station which are slidable towards and away from the station to enable tooling changes to be performed in accordance with the invention;
Figure 3 is a diagrammatic view of the framing station as viewed from the downstream conveyor leaving the station, showing the two gate supports and the demountable gates thereon;
Figure 4 is a side view of the left hand gate support and gate of Figure 3, shown in more detail;
Figure 5 is a view of the upper end of the gate and shows to an enlarged scale how the pin on the upright support frame engages in a locating recess in a support bracket carried by the gate;
Figure 6 is a view in the direction of arrow A in Figure 5 of the actuator mechanism for lifting the pin and tooling gate impaled thereon;
Figure 7 is an elevation of the tooling gate as viewed in the direction of arrow B in Figure 4;
Figure 8 is a similar view albeit of a differently proportioned tooling gate, shown in a parked position carried on a rack to one side of one of the paths shown in Figure 2 viewed parallel to the path;
Figure 9 shows three such racked tooling gates carried on three racks viewed perpendicularly to the path;
Figure 10 is a diagrammatic side view of the framing station viewed in the direction of arrow C in Figure 2;
Figure 11 is a plan view of the path to the left hand side of the framing station as viewed in the direction of the movement of vehicle bodies along the line;
Figure 12 is a side view of the path of Figure 11;
Figure 13 is a cross-section on WW in Figure 11;
Figure 14 is an end view of the support base which runs along the path of Figure 11 as viewed in the direction of arrow D in Figure 11;
Figure 15 is an end view in the direction of arrow E in Figure 11;
Figure 16 is a diagrammatic plan view of another racking arrangement embodying the invention;
Figure 17 is a diagrammatic plan view of yet another racking arrangement involving the invention; and
Figure 18 is a plan view of another embodiment of the invention in which the racks are mounted on rotatable carousels on opposite sides of the path to further facilitate gate changing, and provision is made to change floor pan tooling as required;
Figure 19 is a side elevation of the faculty in Figure 18;
Figure 20 is a plan view of another arrangement similar to that of Figure 18;
Figure 21 is a side elevation of the facility shown in Figure 20, and
Figure 22 is a section on the line A of Figure 20.

### First embodiment

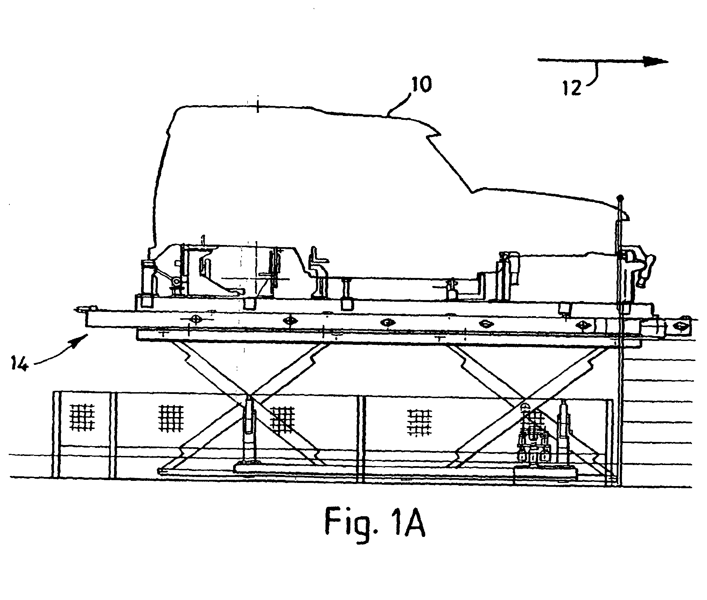

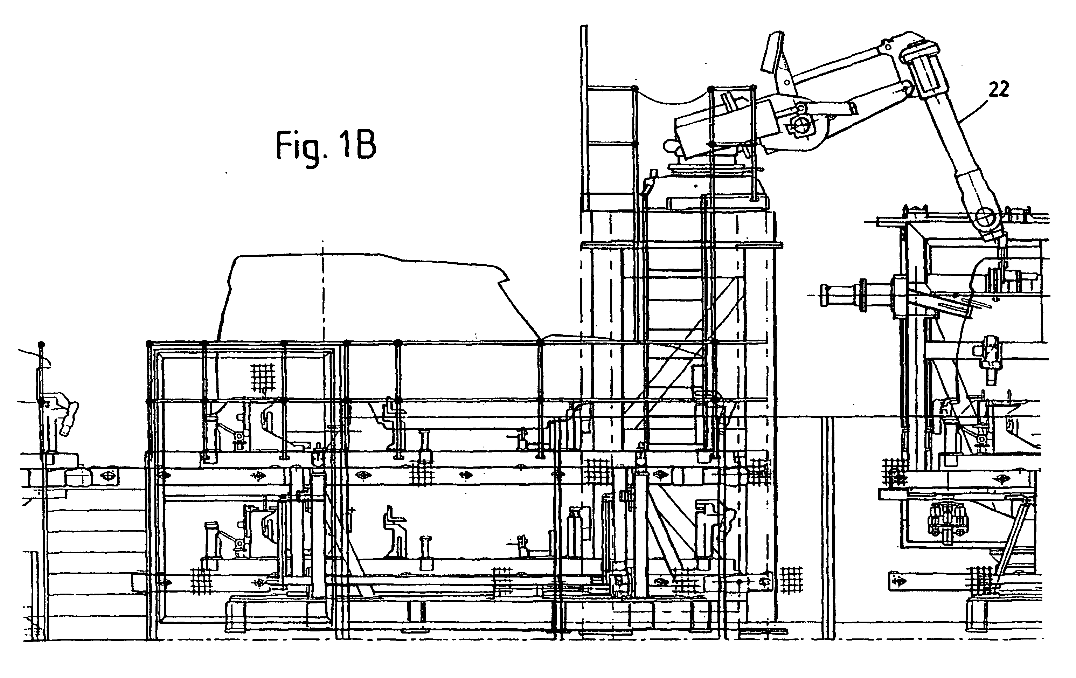

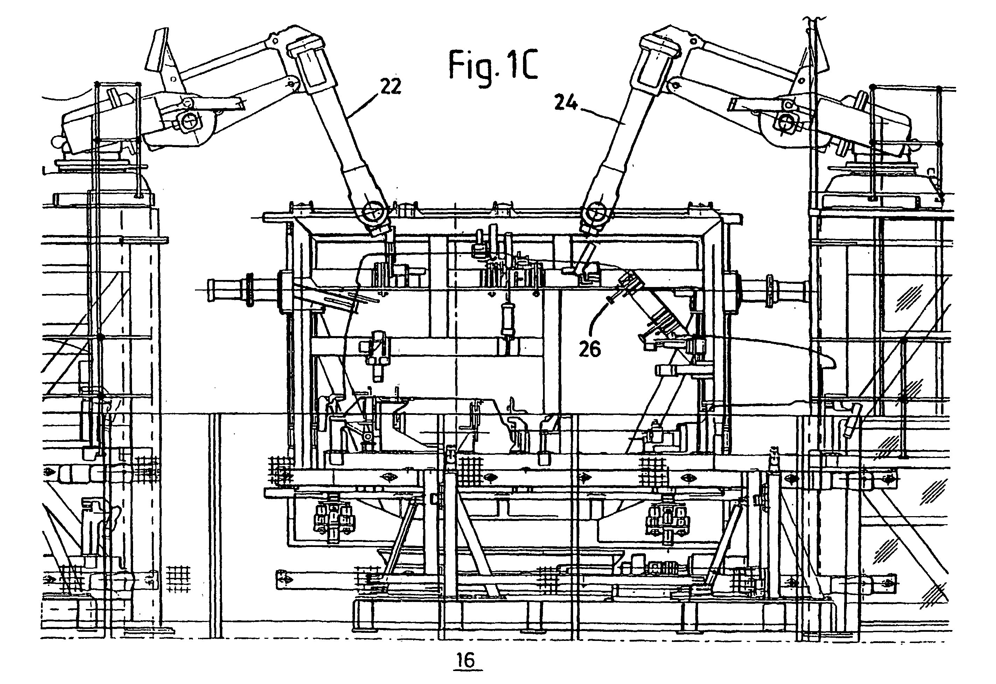

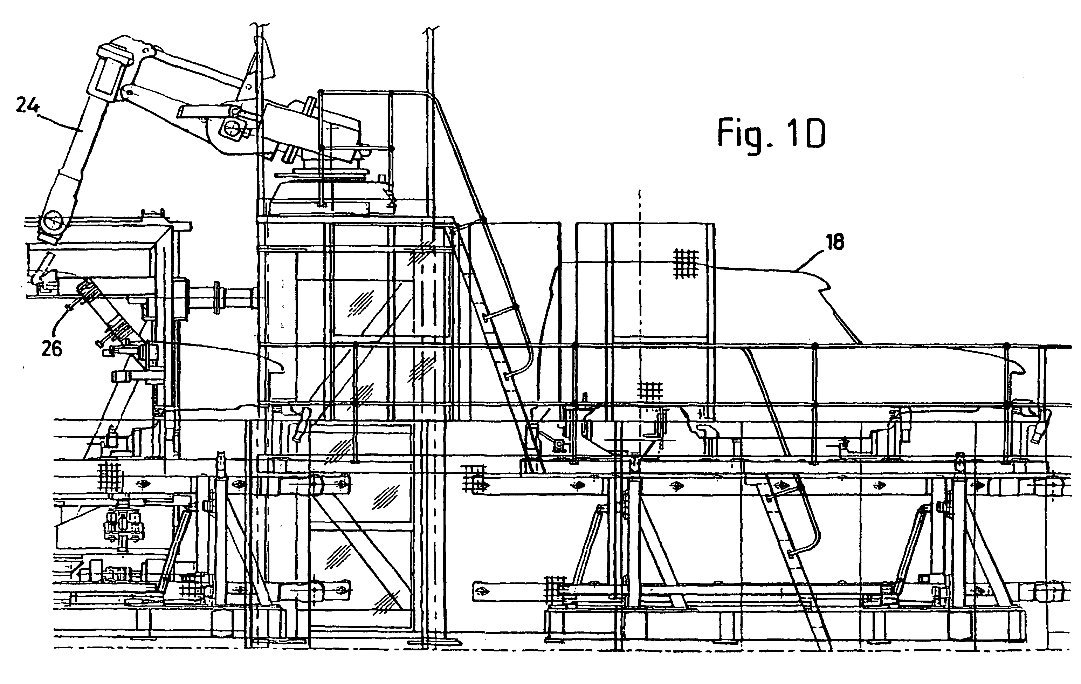

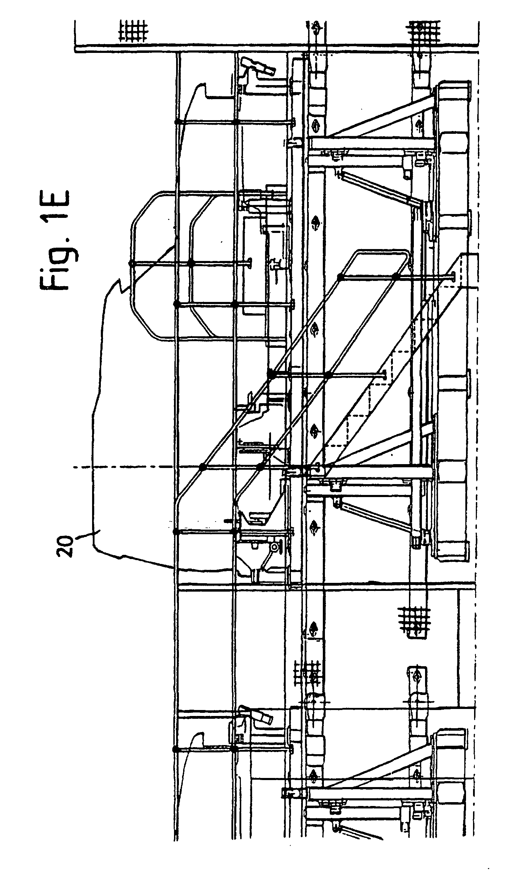

In Figure 1 some of the parts which are to make up a vehicle body such as 10 are moved in the direction of flow designated by arrow 12 by means of walking beams or other conveying means, one of which is diagrammatically indicated at 14, through various workstations towards a framing station at 16. At the framing station the sides, roof and floor pan sections of the body are aligned and positioned correctly before final welding is performed to secure the various component parts of the vehicle body together after which it can progress further down the line into the positions such as shown at 18 and 20 where further fabrication steps can be performed if required.

The framing station includes robotic welding arms such as designated by 22 and 24 and numerous pneumatically operated tooling clamps such as that shown at 26 which are adapted to engage openings and edges of the various panels which make up the vehicle body to align and position same relative to each other to make up the vehicle body.

The jig which is sometimes referred to as a framing buck, is in this case formed from two side members which are typically referred to as gates on which all the tooling is mounted for holding the two side panels, and floor tray support means, which may comprise one segment of a walking beam conveyor.

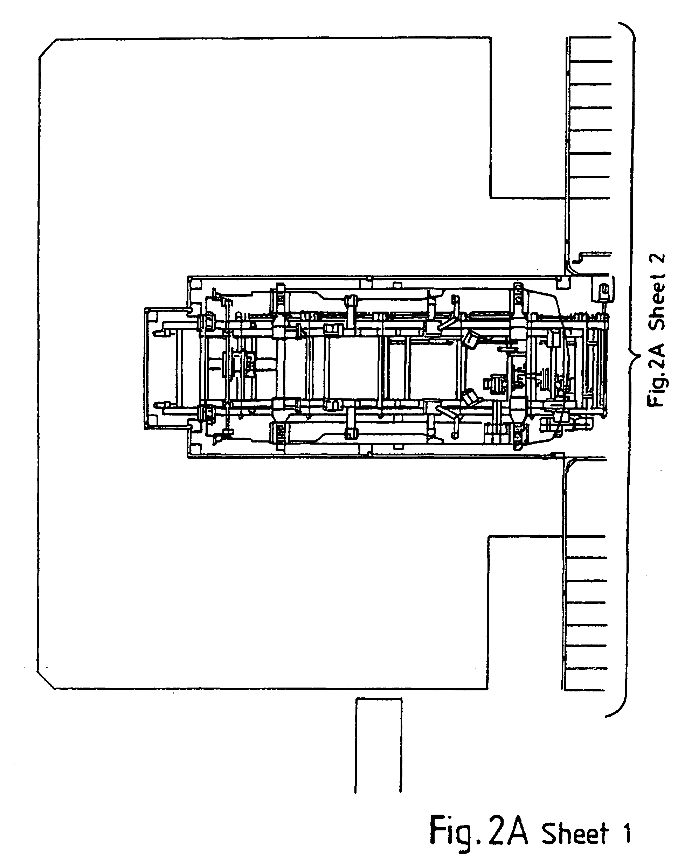

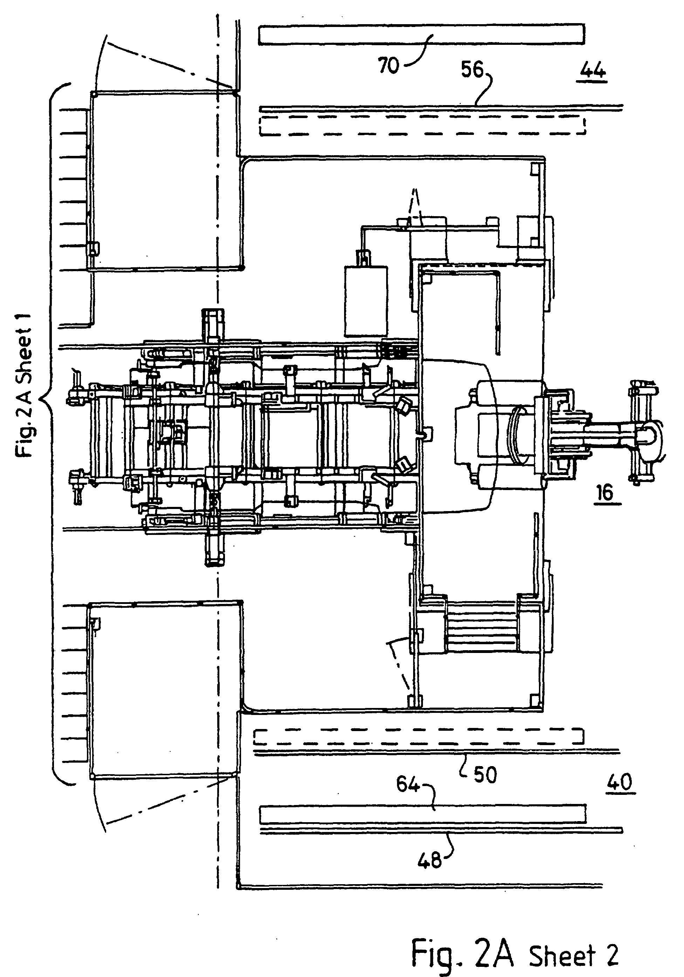

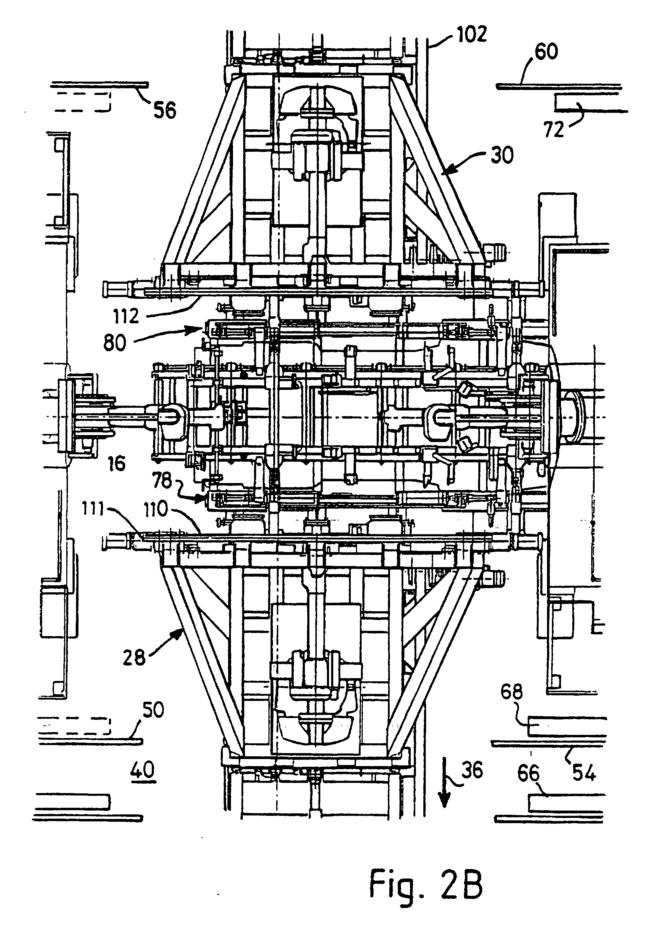

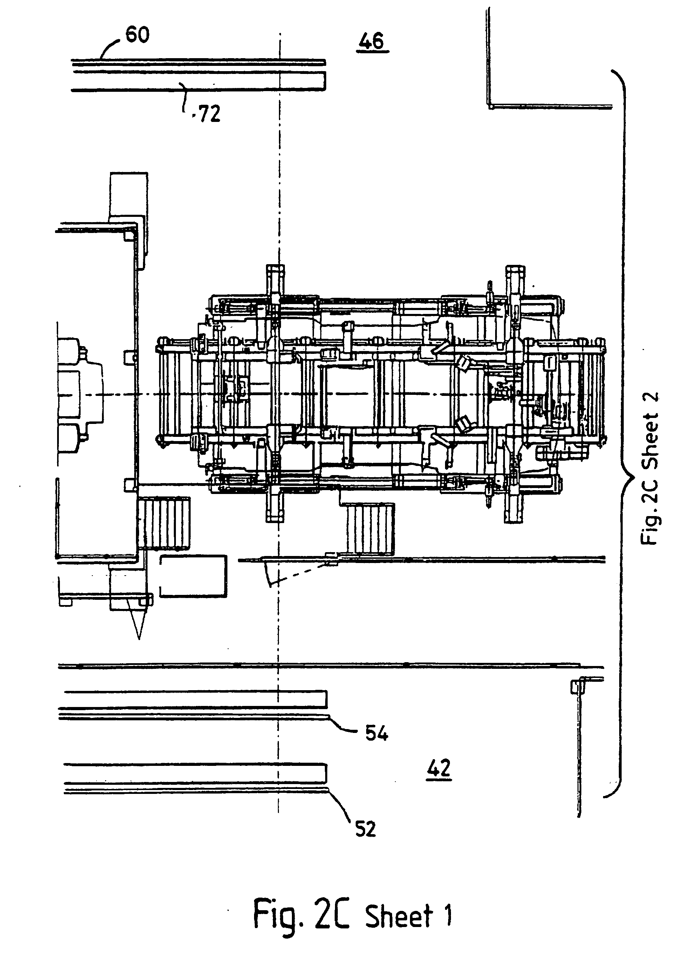

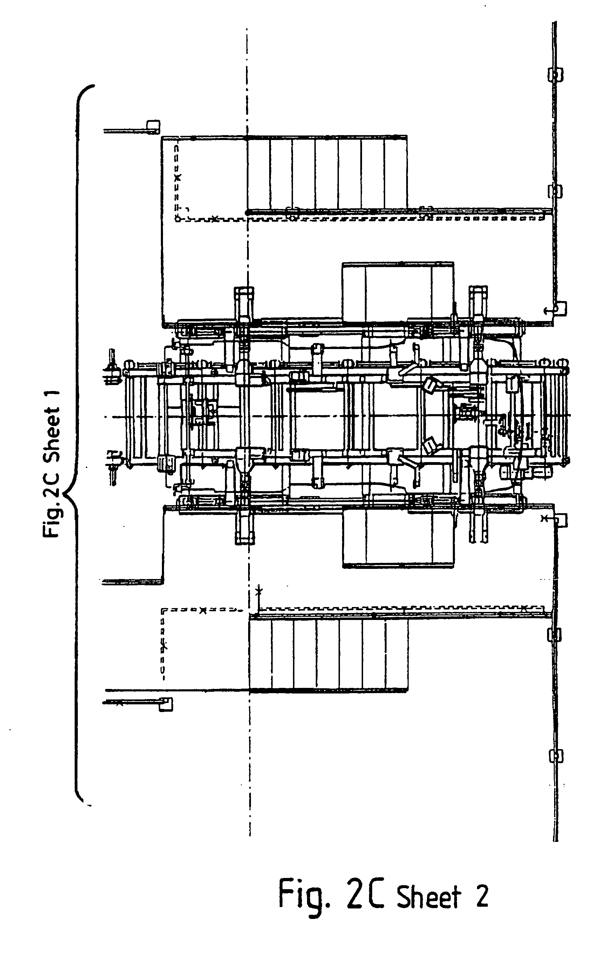

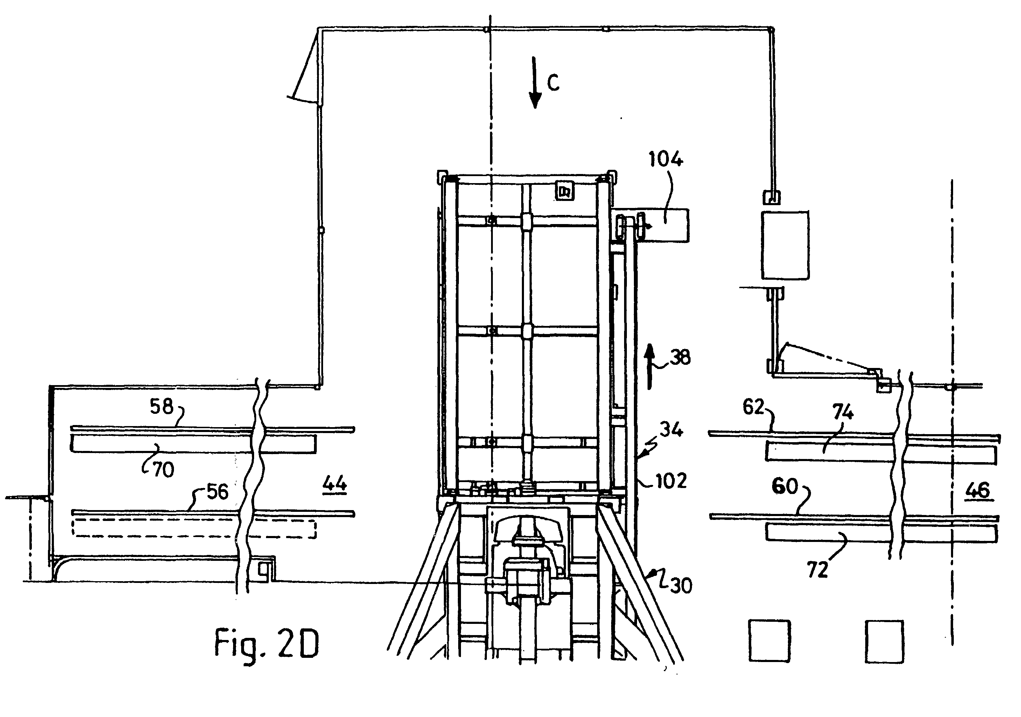

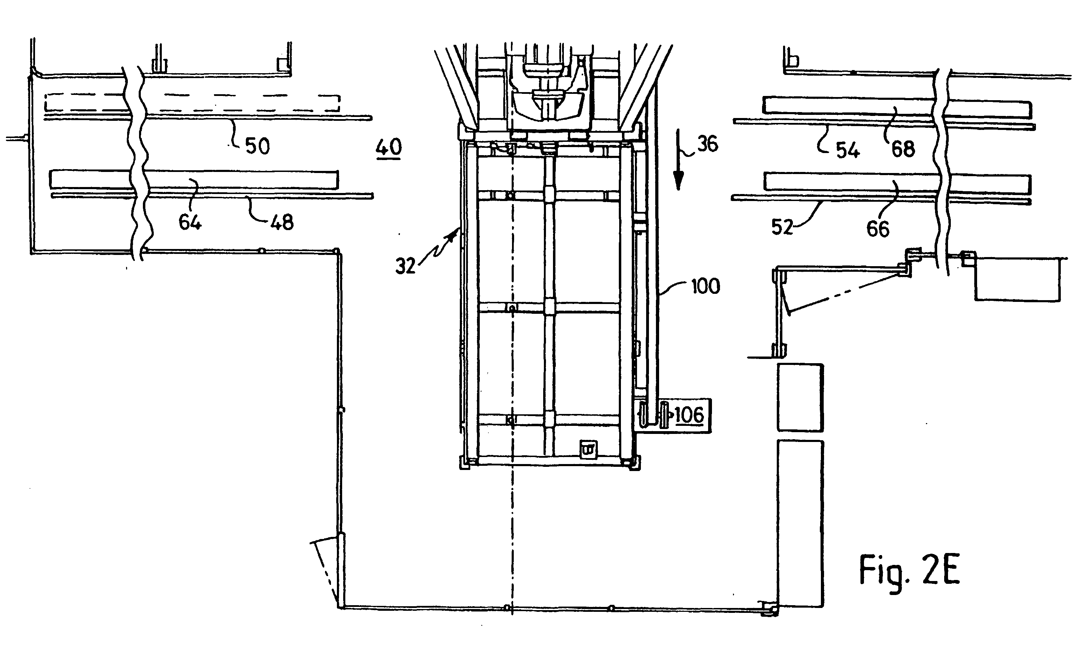

Figure 2 is a plan view of the fabrication line of Figure 1 and this shows more clearly how the two gate support assemblies shown at 28 and 30 can be moved on tracks, generally designated 32 and 34 respectively, into the positions shown in Figure 2, in which the tooling mounted on the gates is operable to engage side body panels located in the framing station, and are also movable in a reverse direction as designated by arrows 36 and 38 away from the framing station to allow for tooling gate changes to be effected.

In accordance with the invention, bays are provided at 40 and 42 for storing on racks the gates for use on track 32. Two further bays are provided at 44 and 46 for storing on racks the gates for use on the track 34. Each of the bays contains two racks. These are denoted by 48 and 50 in the case of bay 40; 52 and 54 in the case of bay 42; 56 and 58 in the case of bay 44; and 60 and 62 in the case of bay 46.

Each of the racks either contains a tooling gate or is empty, its gate having been located on one of the gate support assemblies 28 or 30. Tooling gates are identified by 64, 66 and 68 in connection with racks 48, 52 and 54; and by 70, 72 and 74 in the case of racks 58, 60 and 62. Two of the racks are empty, namely 50 and 56 since it is from these two racks that tooling gates 78, 80 have been drawn and located on the gate supports 28 and 30 respectively, as will hereinafter be described.

### Variations of racking arrangements

Although four racks are shown associated with each of the two tracks 32 and 34, the bays 40, 42, 44 and 46 may be increased in size to accommodate more racks if desired. Also as will be mentioned later, racks may be located on only one side of the tracks and in a still further arrangement which may lend itself to certain factory lay-outs where space is limited on one side of the line, all of the racks may be located on one side of the line and a single track provided on which a composite gate support slides from the racking area into the framing station position, the composite support carrying both side tooling gates.

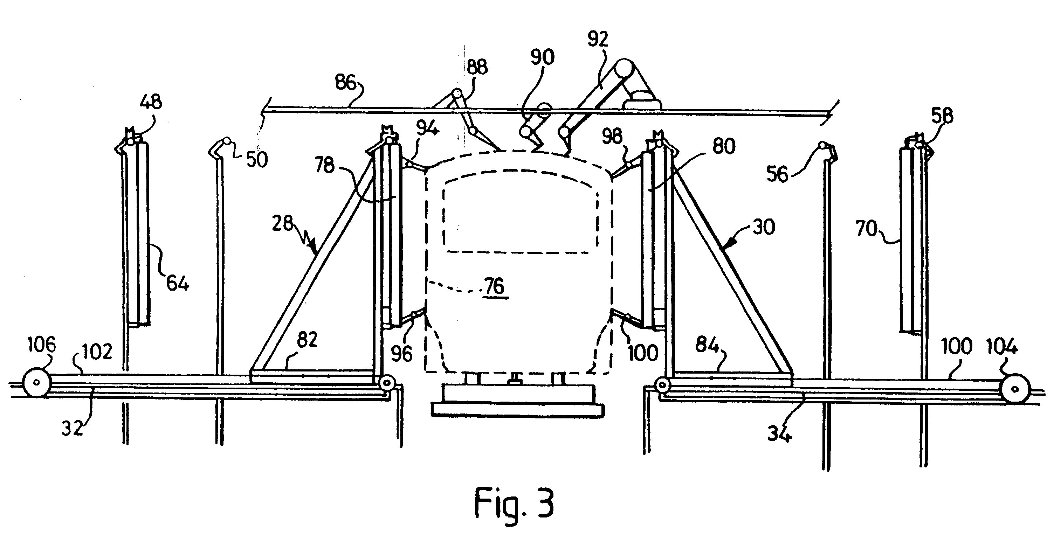

Figure 3 illustrates diagrammatically what would be seen if the framing station 16 of Figure 2 were to be viewed from a position immediately downstream therefrom. A vehicle body fabrication within the framing station is denoted by reference numeral 76 and the two gate supports 28 and 30 are shown on opposite sides thereof. Tooling gate 78 is carried by support 28 and mirror image tooling gate 80 is carried by the support 30.

Each of the supports 28 and 30 includes a base, 82 in the case of gate 28, and 84 in the case of gate 30. Each of these is slidable by means runners or wheels or the like on the parallel tracks 32 in the case of gate 28, and 34 in the case of gate 30.

To the left and right of the framing station are located the two pairs of racks 48 and 50 and 56 and 58. The other racks such as 52, 54, 60 and 62 cannot be seen in the view of Figure 3.

Racking 50 and 56 is shown empty of tooling gates since the tooling gates which would be carried on 50 and 56 are mounted on the two supports 28 and 30 respectively.

Above the vehicle fabrication 76 is mounted a support frame 86 on which are mounted some of the robotic arms such as 88, 90 and 92 carrying welding tips for spot welding the upper regions of the fabrication.

Similar welding tools may be carried by or may be free standing and are adapted to protrude through the tooling gates mounted on the supports 28 and 30. In any case the tooling carried by each gate includes a plurality of pneumatically operated grippers such as 94, 96, 98 and 100 which move and engage appropriate edges of, and/or edges of openings such as door openings in the side panels forming the fabrication, so as to accurately locate these before the spot welds are made.

The two base supports 82 and 84 are attached to endless belt drives 100 and 102 respectively which are driven by motors 104 and 106 respectively.

### Racking design

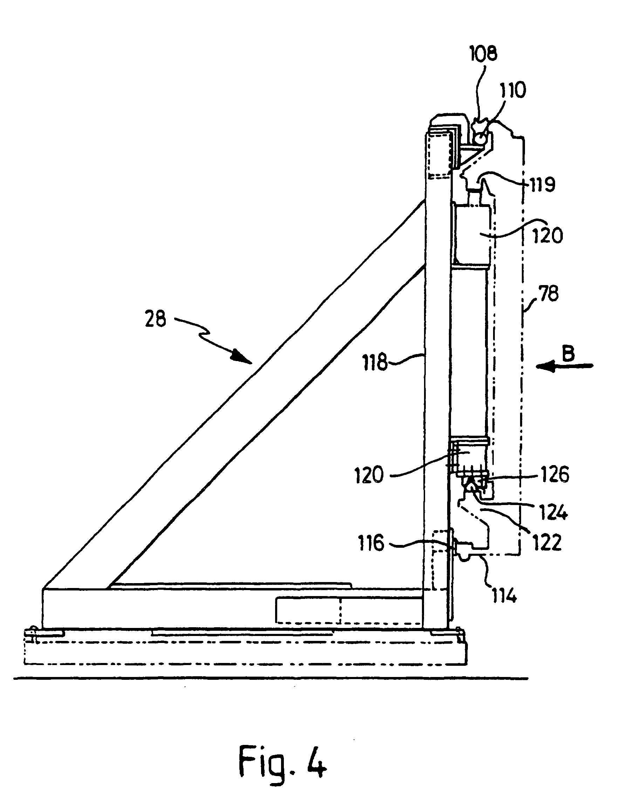

Figure 4 illustrates the support 28, and shows in more detail how the tooling gate 78 can be mounted thereon.

To facilitate transfer from the racking to the support, each of the gates such as 78 includes a plurality of pulleys such as 108 designed to engage and run along a rail 110 (typically a tubular member), which is carried by the upright frame of the support. A similar rail is carried by the racking and it is this rail which is designated as 50 in Figure 2.

By moving the gate support 28 backwards from the position shown in Figure 2 until the rail 110 (which is also denoted by the appropriate reference numeral in Figure 2) aligns with the rail 50, the tooling gate 78 carried by the gate support 28 can be shifted the gate from one rail to the other, namely from 110 to 50. Transferring a tooling gate from a rack to the support is achieved in the same way, but in the reverse sense.

By providing at least three and preferably five such rollers 108, equally spaced apart along the length of the sub-assembly, it is not necessary for the two ends 51 and 111 of the rails to touch It is merely necessary for the two rails to be aligned, albeit with a small gap between the two adjoining ends 51 and 111. Sideways movement of a tooling gate such as 78 will disengage the first pulley 108 from the rail 110 but the gate will still be retained in position by the four other pulleys, and continued sliding movement will cause the leading pulley 108 to engage the rail 50 whereafter continued sliding movement causes the tooling sub-assembly to transfer completely from the rail 110 to the rail 50, at which stage the gate has been completely demounted from the support 28. This is now vacant and can be moved into alignment with one of the other tracks such as 48, 52 or 54 to enable one of the tooling gates 64, 66 or 68 carried thereon to be transferred onto the rail 110 in place of the one which has been demounted and loaded on rack 50.

In exactly the same way tooling can be mounted and demounted from the rail 112 carried by the gate support 30 by aligning the rail 112 with one or other of the rails comprising the racks 56, 58 etc and demounting the one tooling gate, and subsequently mounting a new tooling gate as described in relation to support 28.

The endless belt drives 100 and 102 are also visible in Figure 2, as are the drive motors 106 and 104.

In addition to the support provided by the rail 110, the tooling gate 78 includes a laterally extending arm 114 which engages thrust plates 116 carried by the upright members 118 of the gate support 28. By mounting the pulleys 108 off-centre from the gate 78, there is a turning moment about the rail 110 which causes arm 114 to remain firmly in contact with 116 simply by virtue of the displaced weight component of the tooling gate 78.

In exactly the same way, similar thrust plate means (not shown) is provided on upright frames supporting the racking rails such as 50, so that when the tooling gates are carried on the racking, they are likewise securely held in place by means of their own weight.

If desired, additional locking and bolting means may be provided to secure the tooling gates in their racked positions.

### Gate positioning on support

On the gate supports, the tooling gates have to be secured more accurately than would be possible using the pulleys 108 running on the track 110. To this end a pin and lifting device is provided on opposite sides of the upright frame, one of which is shown at 118, to engage upper brackets on the gate, one of which is denoted by reference numeral 119. The pin and lifting device at the right hand end of the support 28 (as viewed in Figure 2) for engaging a similar bracket on the other side of the frame, is shown at 120 in Figure 4.

Details of the construction and operation of the lifting device such as 120 will be described with reference to later Figures.

The lifting of the tooling gate 78 disengages the pulley 108 from the rail 110. The arm 114 slides relative to the thrust pad 116 for which purpose the surfaces are plane and smooth, to permit this sliding.

To produce better alignment and position the tooling gate 78 relative to the vertical upright members such 118 of the support 78, the tooling gate includes a second lower bracket 122 which includes an upwardly directed pin 124 which is adapted to engage in a channel 126 which is carried on the underside of a bracket designated 128 which is secured to the upright member 118. The channel 126 extends parallel to the rail 110 over a distance of a few centimetres and the vertex is positioned accurately relative to the member 118 so that as the sub-assembly 78 is lifted off the rail 110, the pin 124 enters the channel section and is guided into the vertex so that the tooling is displaced away from the member 118 by a small distance. This disengages the arm 114 from surface 116 and positions the lower end of the tooling gate relative to the upright member 118 by a predetermined distance determined by the position of the vertex of the channel 126. This may be adjusted during initial setting up so as to position the tooling gate precisely relative to the support 28.

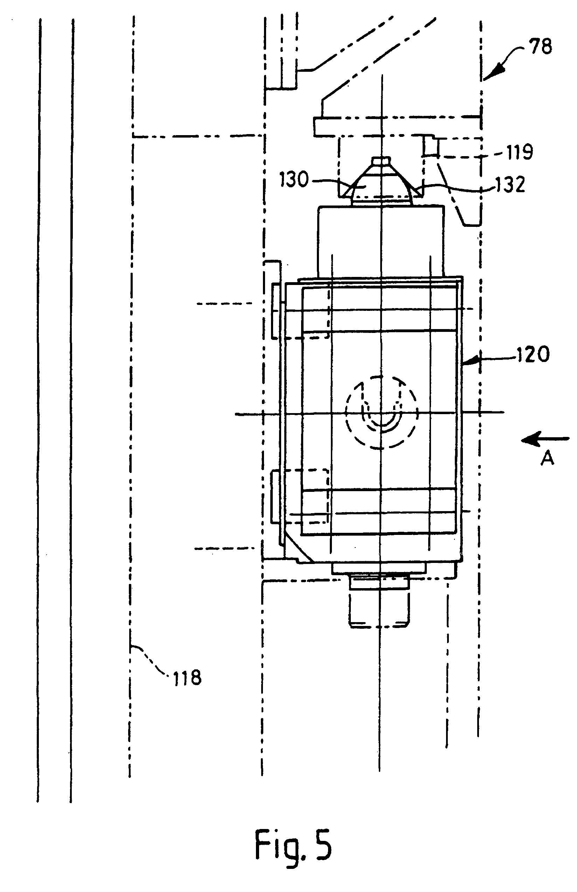

Figure 5 shows the engagement between the lifting device 120 and the bracket 119 previously referred to in relation to Figure 4.

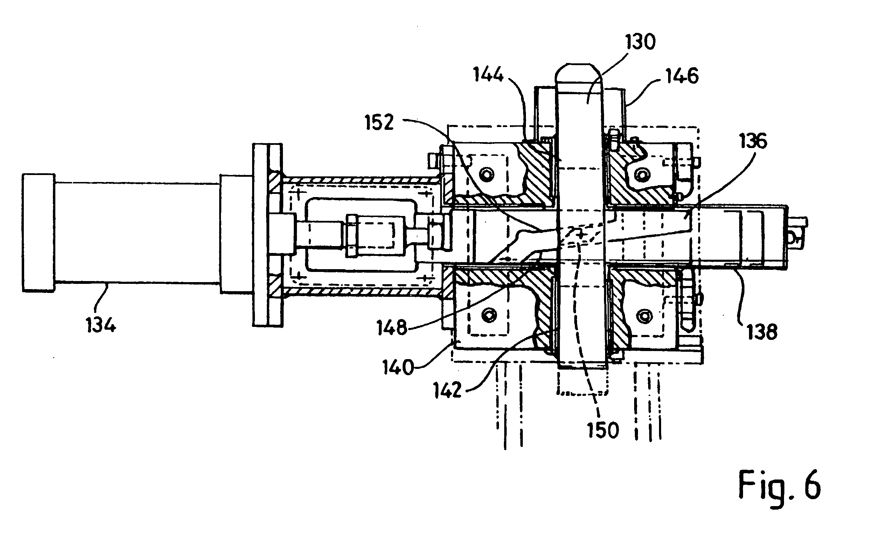

The lifting device which will be described in more detail in relation to Figure 6, serves to elevate a pin 130, the upper end of which is tapered and is adapted to engage in a frusto-conical recess 132 formed in the underside of a thrust member forming part of the bracket 119. The latter is rigidly attached to the gate 78 and upward movement of the pin 130 engages the frusto-conical surface 132 and not only serves to lift the gate 78 relative to the upright frame member 118 but also tends to centre the pin 130 relative to the surface 132 and therefore laterally displace the gate 78 relative to the frame 118.

The combination of the centering action at both upper and lower ends of the gate, serves to accurately position the latter relative to the frame 118 and therefore the remainder of the gate support 28.

The position of the lifting device 120 relative to the frame 118 can be adjusted during initial setting up so that the gate 78 stands off from the frame 118 by precisely the desired amount so that when the gate support 28 is moved into its forward-most position, the tooling on the gate 78 is precisely positioned relative to the tooling on the gate on the opposite side of the framing station, so that both side panels located on the tooling are positioned accurately squarely and precisely relative one to the other, so as to form for the opposite sides of a vehicle body.

### Gate lifting device

The lifting device is shown in Figure 6. This comprises a pneumatic cylinder 134 which when extended urges a block 136 slidable within a slideway 138, to move from left to right as shown in Figure 6. A housing 140 extends above and below the slideway 138 and contains two aligned slideways or bores 142 and 144 through which the pin 130 extends and within which it can slide.

A protective sleeve 146 surrounds the protruding upper end of the pin 130.

The block 136 includes a thrust surface 148 which is inclined at a shallow angle relative to the axis of the slideway 138 and a peg 150 which is integrally formed or rigidly secured to the pin 130 engages with the surface 148 so that left to right movement of the block 136 forces the pin 130 in a generally upward sense. The displacement of the pin 130 is governed by the angle of the inclined surface 148 and the stroke of the ram 134 and therefore block 136. Likewise the force exerted by the ram 134 is also magnified inversely in relation to the relative displacements of the ram and pin.

For symmetry, the pin may extend through a slotted region of the block 136 or the pin itself may be slotted to receive the block 136. In the latter case, the block may be formed with a reduced cross-section width in the region of the surface 148 or may be bifurcated in the region of the inter-engagement between the block and the pin.

To provide for positive withdrawal of the pin 130, a second parallel inclined surface 152 may be provided and the peg 150 is appropriately shaped so as to engage both inclined parallel surfaces 148 and 152.

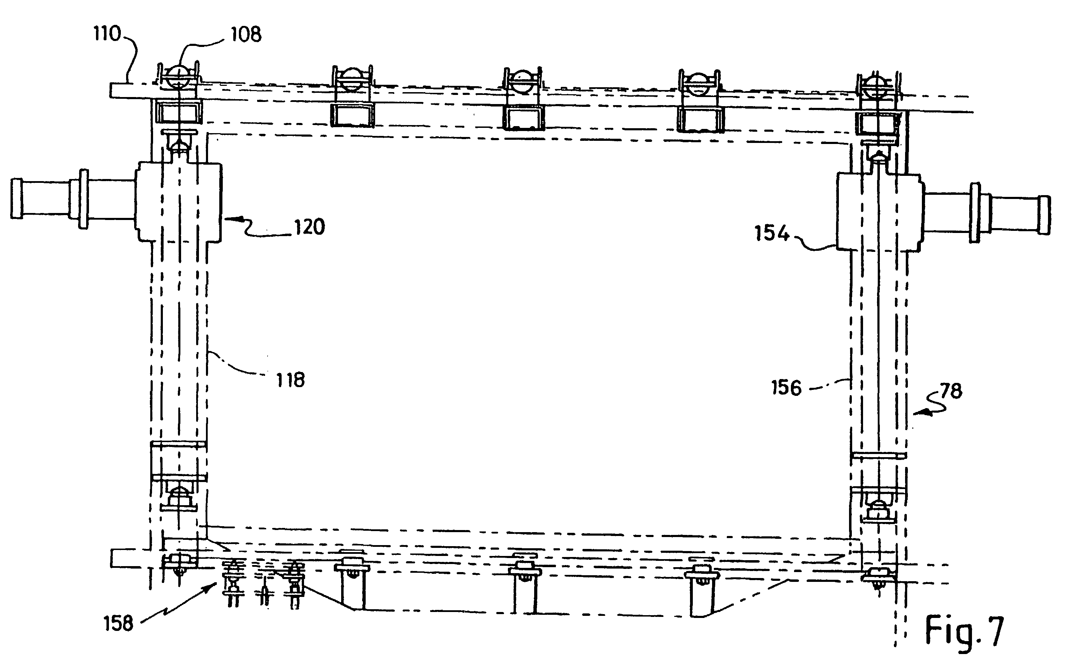

Figure 7 shows how two such lifting devices are mounted on the gate support assembly 28, one on each of the two vertical uprights such as 118 in Figure 4. Thus in Figure 7 the lifting device 120 is shown at the upper end of upright 118 and a second lifting device 154 (similar in all respects to lifting device 120 but oppositely handed) is mounted on the other upright member 156.

Figure 7 also shows the vee pulleys, one of which is denoted by reference numeral 108, which engage the rail 110 carried by the gate support 28.

Also shown is a docking facility generally designated 158 by which pneumatic and/or vacuum and/or electric power can be supplied to the gate 78. A similar docking device (not shown) is provided for the opposite gate 80.

### Gate shift on and off the racks

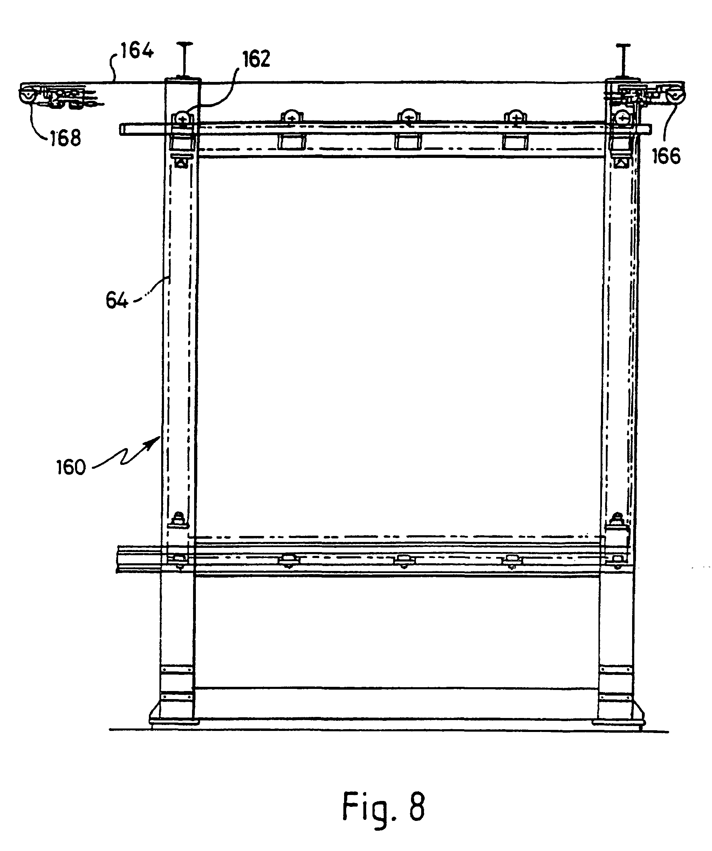

Figure 8 shows the tooling gate 64 carried by a rack generally designated 160 which at its upper end includes the rail 48 (see Figure 2). The tooling gate 64 includes vee pulleys such as 162 which engage the rail 48. An endless belt drive 164 which passes around pulleys or toothed wheels 166 and 168 at opposite ends thereof is connected to the tooling gate 64, and a drive motor (not shown) produces movement of the endless belt 164 so as to shift the tooling gate 64 either onto or off the rack rail 48. To this end the drive between the belt and gate is such that movement of the support 28 by its drive 100, along its relevant path 32, disengages the gate-shift drive 164 from the gate 64. Subsequent movement of the support 28 so as to re-align the gate 64 with the rail 48 automatically re-engages the gate shift drive 164 with the gate 64.

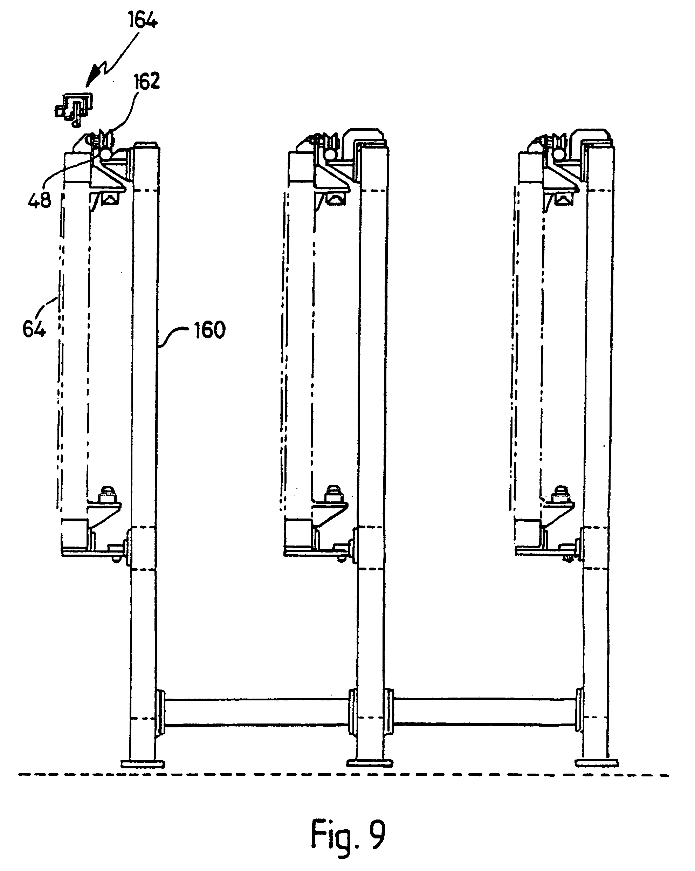

Figure 9 shows three racks spaced apart as in one of the bays in Figure 2, and features of the left hand rack in Figure 9 are identified by reference numerals used elsewhere. For simplicity the drive 164 is replicated for each of the racks.

### Alternative gate shift

As an alternative arrangement not shown, a single drive mechanism similar to 164 is provided, mounted on the gate support such as 28, which is adapted to engage the upper end of a racked gate such as 64 to slide the latter off its associated rail 48 and onto the rail on the gate support when the latter is aligned with the relevant rack. Reverse operation of the drive allows the gate carried by the gate support to be shifted, ie re-racked, and to allow another gate to be picked up and shifted onto the now empty gate support.

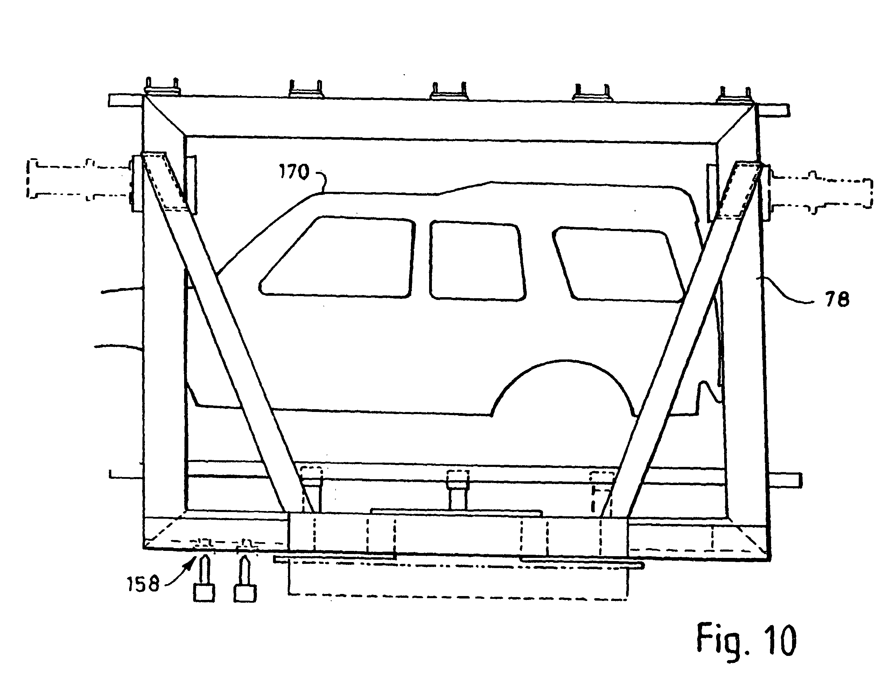

Figure 10 is a view similar to that of Figure 8 but showing the outline of the motor vehicle body side panel on which is superimposed the structural parts of the gate support assembly 28. The docking arrangement 158 already referred to for supplying power to the gate is again visible in the bottom left hand corner.

### Gate support construction and transfer along path

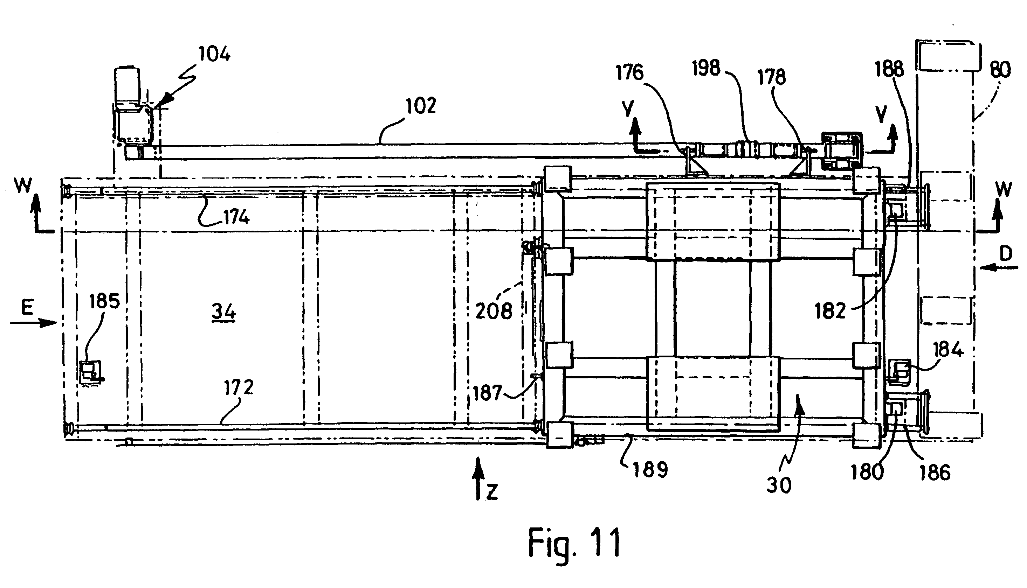

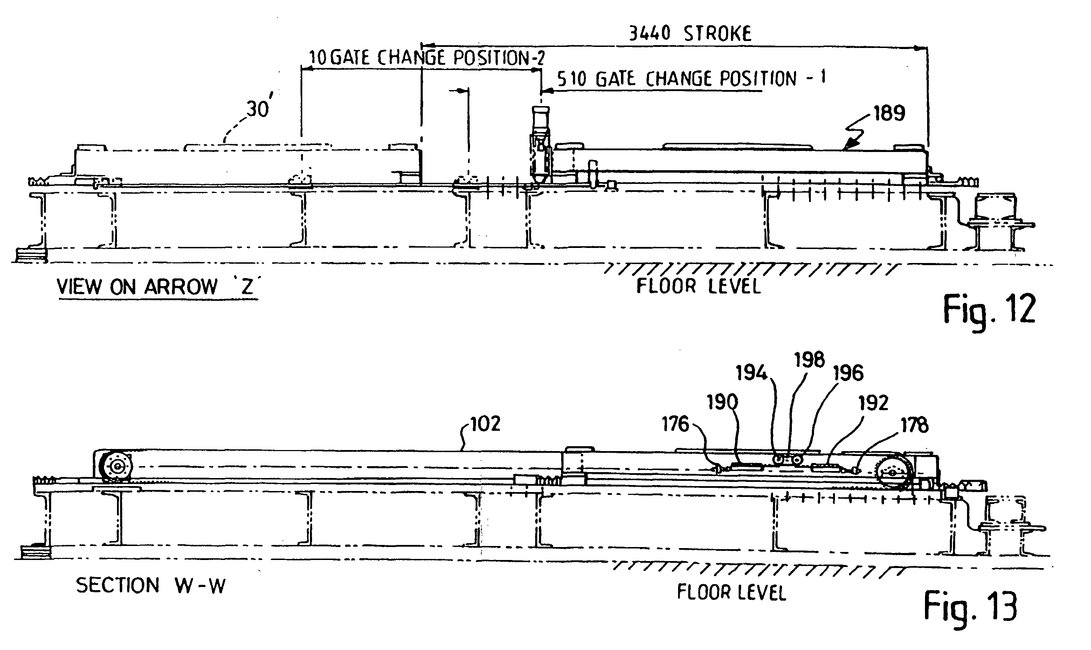

Figure 11 shows the gate support 30 and the tracks 172 and 174 defining the path 34 along which the unit 30 slides. The endless belt drive 102 and drive unit 104 are also visible. Two brackets 176 and 178 extend from the side of the unit 30 and opposite ends of the belt 102 are secured thereto. Details of this are shown in Figure 13.

End stops at 180 and 182 arrest the forward movement of the carriage of the support 30. A position sensing device is located at 184 to arrest power to the motor 104. The tooling gate 80 is carried by presettable stand-offs 186 and 188 respectively.

Figure 12 shows the different positions for the platform 189 forming the base of the gate support 30, and in Figure 13 more detail is given of the connection of the ends of the belt 102 to the brackets 176 and 178. In order to provide for a degree of lost motion during initial take-up and when the motion of the gate support 30 is arrested, springs 190 and 192 are positioned between the belt ends and the brackets 176 and 178 and the belt 102 extends around two pulleys 194 and 196 which are joined by a housing 198. The springs and housing are also shown in Figure 11.

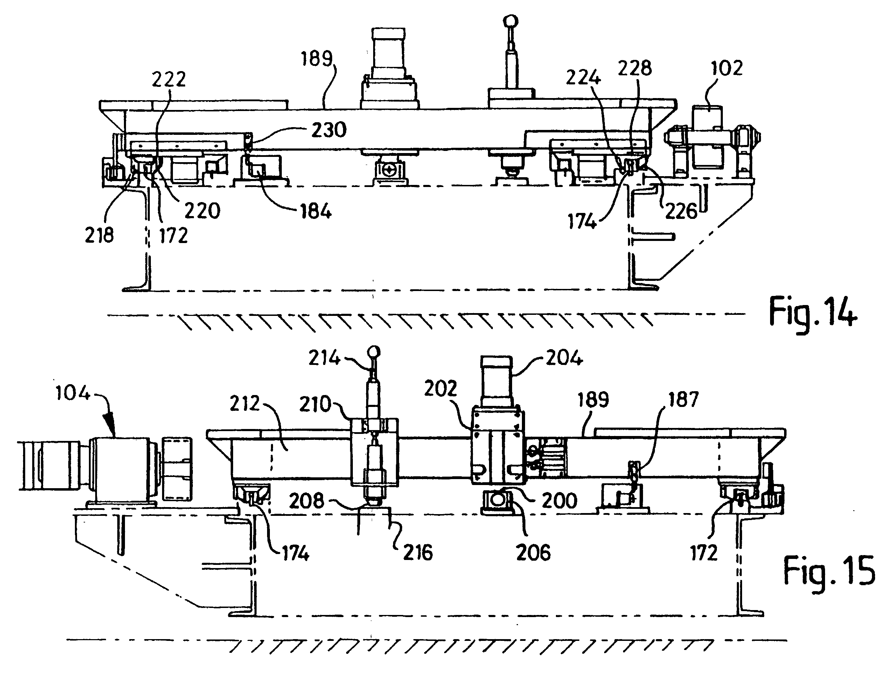

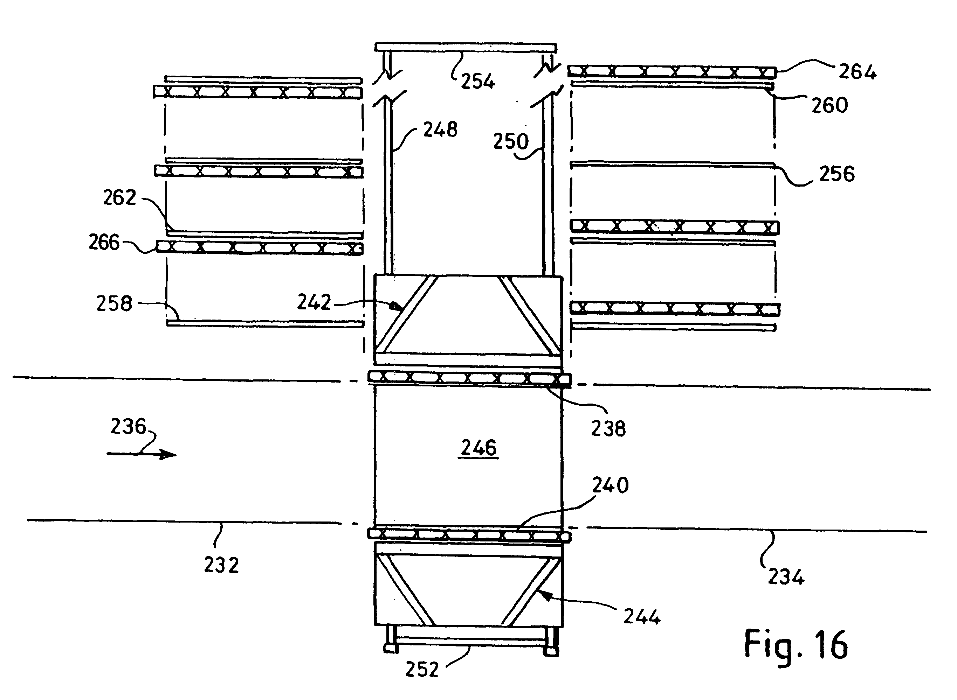

Figure 14 and Figure 15 show the construction and mounting of the base 189 from which the various upright and inclined members extend to form the support on which a gate can be mounted as shown in Figure 4.

### Gate support locking

In order to accurately locate the base 189 at the forward end of its travel, so that the tooling carried thereon is correctly positioned, a pneumatically operated pin 200 slidable in a housing 202 and driven by a pneumatic cylinder 204 is carried by the base 189 for engaging, when lowered, in an aperture in a block 206 mounted on a transversely extending member 208 fitted between the two rails 172 and 174 of the structure making up the part 34.

The microswitch 184 triggers when the base 189 is in position and at that point air is supplied to the cylinder 204 causing the pin 200 to descend and enter the opening 206.

The lower end of the pin 200 is chamfered and formed with a rounded nose to facilitate entry into the opening in the block 206 and to further facilitate entry the upper end of the opening is likewise flared to form a trumpet-like entrance.

By arranging that the pin is a close slipping fit in the lower regions of the opening in the block 206, so the descent of the pin 200 will accurately position the base 189 on the rails 172, 174 and thereby accurately position the tooling relative to the framing station.

Adjustment of the position of the block 206 permits the final position of the base 189 to be set up during initial commissioning of the facility.

Where it is desired to lock the base 189 and the associated tooling gate located thereon in a semi-permanent position on the track 34, a second pin 208 is provided which is slidable in a housing 210 also carried by the rear transverse strut 212 of the base 189, and a manually rotatable handle 214 is provided for rotating a screw-down drive for lowering and raising the pin 208. During initial commissioning, a second block 216 similar to the block 206 is positioned relative to the second pin 208 so that when the first pin 200 is correctly aligned and has entered fully the opening in the block 206, the pin 208 will also slide freely as a slipping fit into the opening in the block 216.

To facilitate entry, the lower end of the pin is chamfered and the entrance to the opening in the block 216 is likewise flared as is the entrance into the opening in the block 206.

Also visible in Figures 14 and 15 are the tracks 172 and 174 and it will be seen that the base 189 includes track engaging members denoted by reference numerals 218, 220 and 222 (in the case of track 172), and 224, 226 and 228 (in the case of track 174). The members 218, 220 etc, may be rolling members or may be slides formed from a suitable high slip material.

Microswitches are in fact provided at both ends of the travel along the path 34 and the microswitch 184 of Figure 11 is replicated at the opposite end by a microswitch 185. Microswitch engaging fingers are provided for engaging the microswitches 184 and 185. The finger for engaging 185 is denoted by reference numeral 187 and this is denoted in Figures. A similar finger located at the forward end of the base 189 is denoted by reference numeral 230 and is visible in Figure 14.

Where the tooling gate support 30 is to be moved on frequent occasions in a backwards and forwards sense to permit tooling changes to be effected, the manually operable locking pin 208 may be omitted or simply "locked" in the upper position, so that it makes no engagement with the block 216. To this end the positioning of the gate support 30 is wholly dependent upon the engagement of the pin 200 with the opening in the block 206.

### Second embodiment

Figure 16 illustrates an alternative arrangement in which a transfer line is divided into two segments 232 and 234, with the direction of transfer given by the arrow 236 and along which side panels of a vehicle body to be constructed at the framing station intermediate the two sections 232 and 234, are moved by conveyor means such as walking beams or the like.

At the framing station two sets of tooling 238 and 240 serve to attach to the side panels on opposite sides of the framing station so as to position and locate the two side panels precisely and accurately ready for welding to a floor pan (not shown) and a roof (not shown). In accordance with the invention the two sets of tooling are carried by gate supports 242 and 244 respectively and the two gate supports are mounted on a single base 246 which is adapted for sliding on two rails 248 and 250 which extend across the divide between the two segments of the transfer line 232 and 234. Buffers are provided at 252 and 254 and locking means such as shown in and described in relation to Figures 14 and 15, is provided at one or both ends of the base 246, so that when the latter is correctly positioned in alignment with the transfer line 232, 234, the base 246 is prevented from further movement along the rails 248, 250.

Tooling gates for mounting on the supports 242 and 244 are carried by racks each of which is constructed in similar manner to that described earlier in relation to Figures 8 and 9. In Figure 16, six racks are shown on each side of the path formed by the rails 248, 250 and empty rails are shown at 256 and 258 to denote from where the two tooling gates 238 and 240 respectively have been retrieved and mounted on the two gate supports 242 and 244. By carefully positioning the racks and rails such as 256 and 258, so it is possible to move the base 246 along the rails 248, 250 into any one of six different positions in each of which two of the racks, one on each side, aligns with the rails on the base 246 on which tooling gates are to be hung. Using the example shown in Figure 16, the base 246 would first need to be located so that the tooling gates 238 and 240 can be slid respectively onto the rails 256 and 258 and thereafter the base 246 would need to be indexed to another position, for example the next one along to align 242 with the rail 260 and 244 with the rail 262, to enable the tooling gates 264 and 266 respectively to be slid on to the rails on the supports 242 and 244 respectively, after which the assembly can be moved back to occupy the position shown in Figure 16, this time with the new tooling gates in position.

It is not necessary for the tooling gates to be racked on both sides of the path formed by the rails 248, 250 as shown in Figure 16, and if desired, the gates can be racked along one side or the other only, but in this event the number of racks must be an even number since the gates must be arranged in pairs. Preferably each pair must be separated by the appropriate distance between the gate locating positions on the base 246.

### Third embodiment incorporating floor tray tooling change

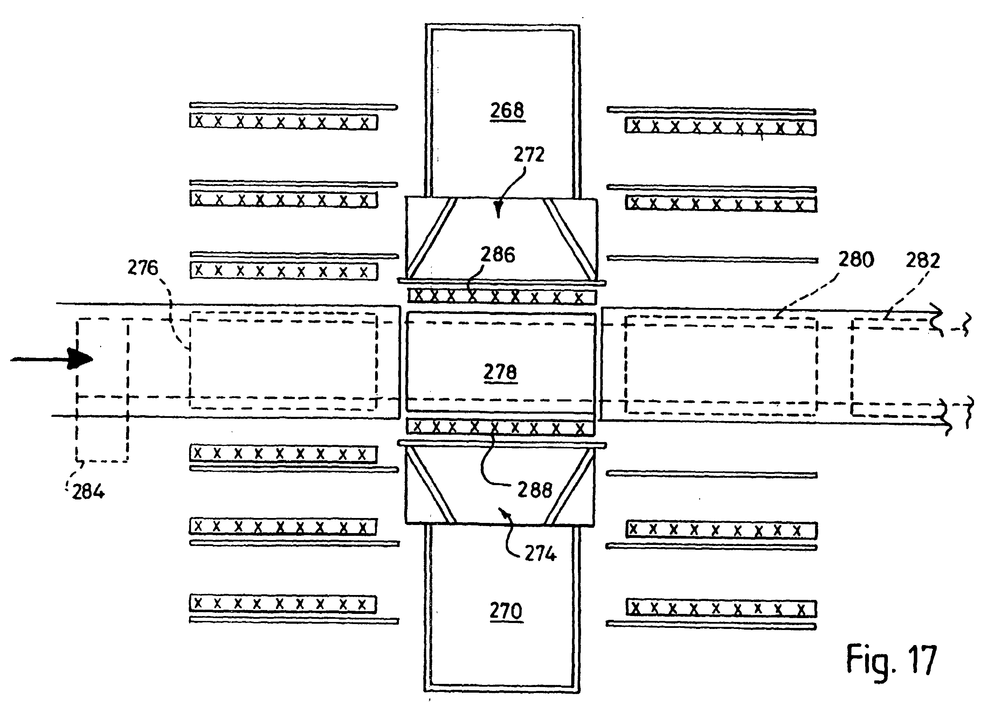

Figure 17 illustrates a further arrangement in which tooling gates are racked on opposite sides of two paths 268 and 270 respectively. Gate supports 272 and 274 respectively slide along the two paths 268 and 270, for collecting tooling gates from pairs of racks and moving the retrieved tooling into position, as shown in Figure 17, on opposite sides of the framing station. The latter also cooperates with a low level conveyor 275 which carries, as shown, four different floor tray tooling sets 276, 278, 280 and 282. Adjustment of the conveyor 275 using a drive means 284 permits any one of the four floor tray tooling sets to be located in the base of the framing station to cooperate with an appropriate pair of side panel tooling gates such as 286 and 288 respectively.

### High speed gate shift arrangement

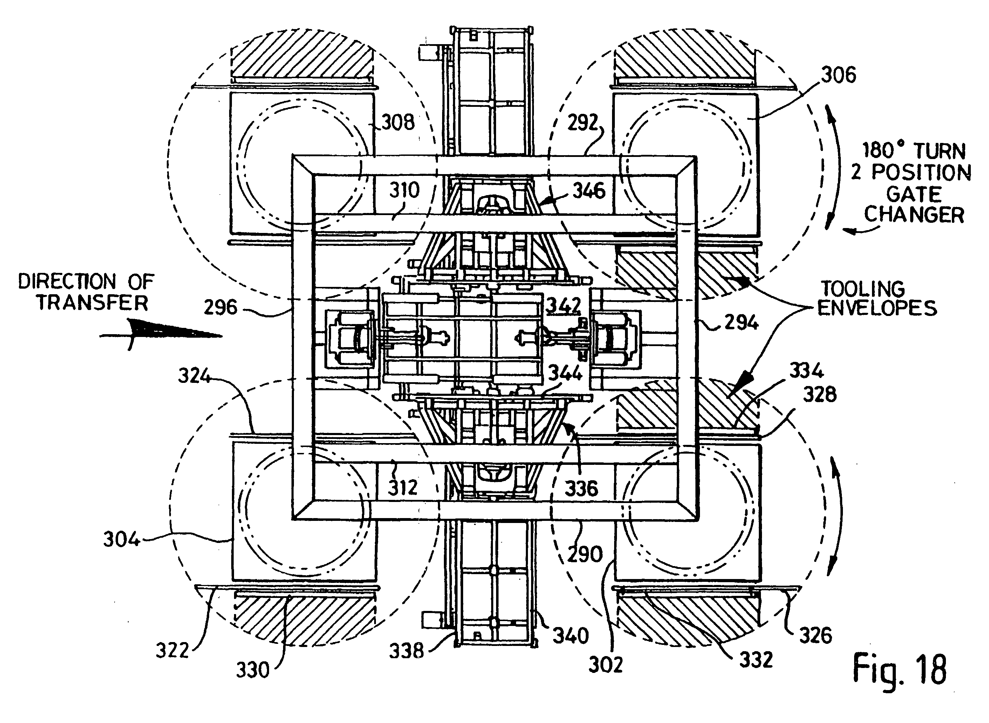

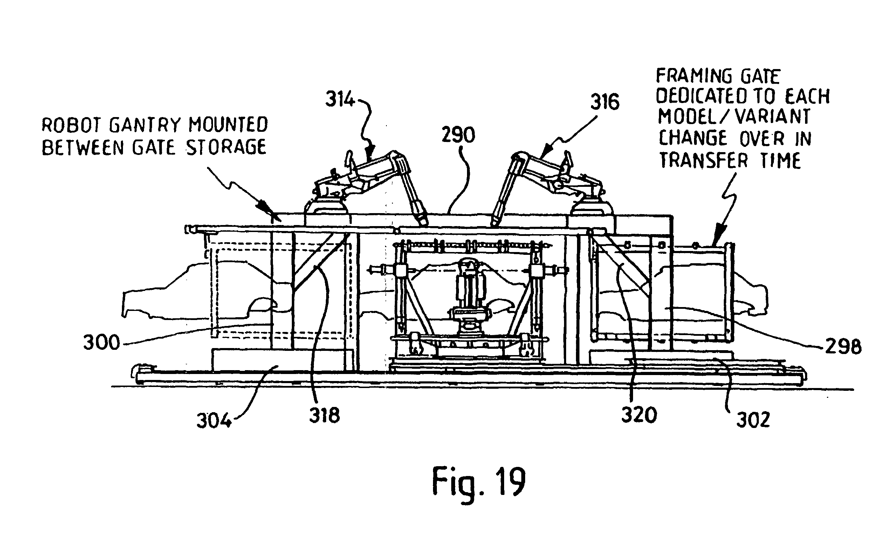

Figures 18 and 19 show plan and elevation views of a particularly preferred modification of the basic arrangements provided by the invention.

The first point of difference lies in the substantial rectilinear framework of upper elongate members 290, 292, 294 and 296 which together make a generally square frame which can be seen in Figure 18. This is supported at its four corners by four uprights, two of which are visible in Figure 19 at 298 and 300 respectively. Rotatable around each of the uprights are motorised carousels 302, 304, 306 and 308 and the structure is further braced by elongate members 310, 312 which extend between 294 and 296 intermediate the elements 290 and 292.

Midway of the struts 294 and 296 are located two robots 314 and 316 and bracing struts 318 and 320 assist in carrying the weight of the robots.

Mounted on the carousels in an upward region thereof are rails 322 and 324 (in the case of the carousel 304), and 326 and 328 (in the case of the carousel 302). The rails are offset relative one to the other and are parallel and equidistant from the centre of rotation of the carousel. Each is capable of carrying a tooling gate 330 (in the case of rail 322), 332 (in the case of rail 326) and 334 (in the case of rail 328).

The tooling gate which would be carried by rail 324 is mounted on a gate support assembly generally designated 336 which is slidable on a track made up of two parallel rails 338 and 340 and which extend between the two carousels 302 and 304.

In the position shown, support 336 locates the tooling gate which has been retrieved from rail 324 on one side of a framing station generally designated 342.

By driving the support 336 rearwards until the rail 344 carried thereon aligns with the rail 324, the tooling gate carried by the support 336 can be transferred onto the rail 324 and can be replaced by the tooling 334 carried on the rail 328.

The advantage of the arrangement is that the distance through which the gate 336 has to travel along its rails 338, 340 between mounting and demounting of gates from rails 324 and 328, into the active position in the framing station, is very small, and it is no longer necessary for the support 336 to travel rearward through a significant distance to line up with the other rails (such as 322 and 326), since by rotating the carousels 302 and 304, the positions occupied by the rails 324 and 328 now can be occupied by the rails 322 and 326 respectively so that the tooling carried thereon is now available to be located on the support 336.

More to the point, tooling carried by the rails 322 and 236 is well clear of the framing station and faces outwardly so as to be available for tool change, tool repair and even replacement of a complete gate, without interfering with the operation of the framing station which can therefore continue to operate relatively uninterruptedly.

The support 336 is mirrored at 346 and tooling gates carried by the carousels 306 and 308 can be mounted and demounted in exactly the same way as described in relation to support 336.

### Modification to high speed gate shift

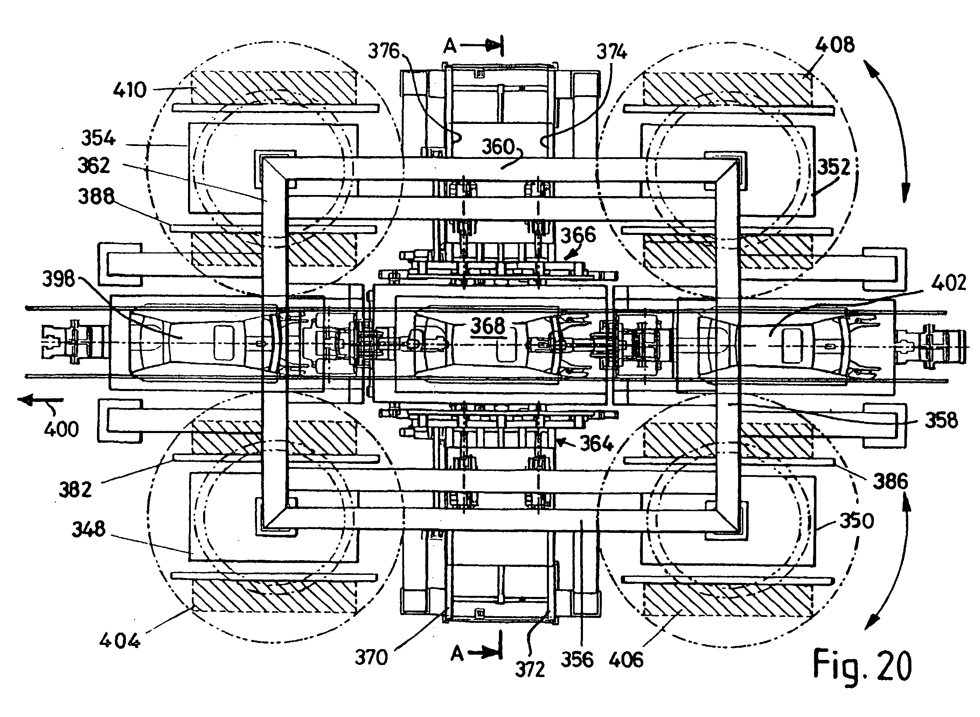

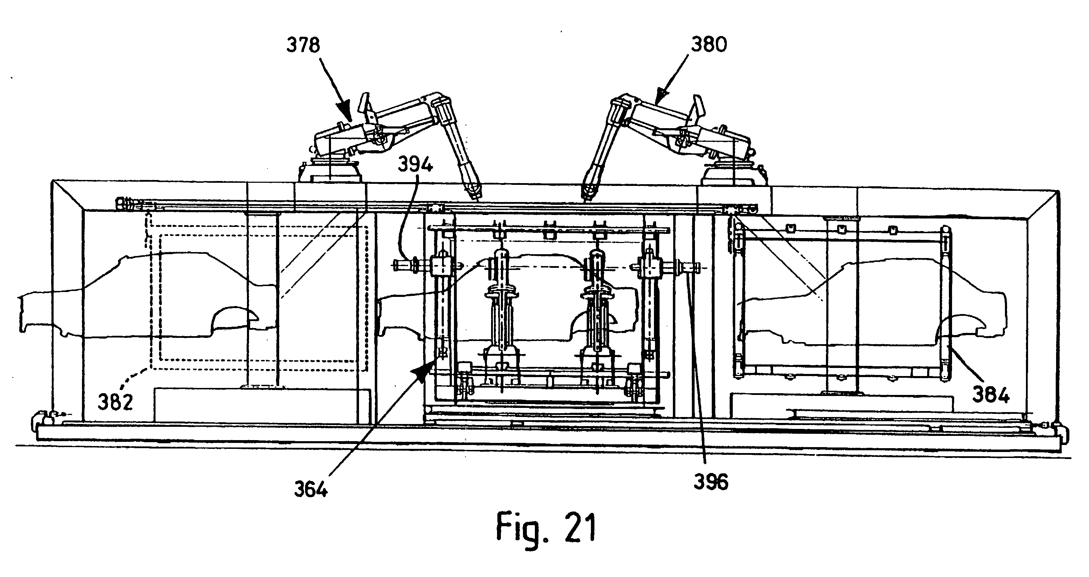

Figures 20, 21 an 22 illustrate plan and elevation views of a facility similar to that shown in Figures 18 and 19, but which includes a refinement for locating different underbody tooling in the framing station as required.

Referring in particular to Figure 20, carousels 348, 350, 352 and 354 are located as before at the four corners of a generally rectangular upper frame made up of elongate members 356, 358, 360 and 362.

Two tooling gate supports generally designated 364 and 366 are located on opposite sides of a framing station 368 in which the component parts of a vehicle body are shown diagrammatically in Figure 20 and the supports 364 and 366 respectively slide on paths made up of parallel rails 370, 372 on the one hand and 374, 376 on the other.

As best seen in Figure 21, high level robots 378 and 380 are carried on the upper frame members 362 and 358 and as denoted by dotted outline in Figure 21, the tooling which would have occupied the rack 382 (see Figure 20) is missing and instead is mounted on the support frame 364. The currently unused tooling gate 384 which is carried by the rack 386 (see Figure 20) is shown in position in Figure 21 and can be retrieved and located on the support 364 in the manner previously described in relation to Figures 18 and 19.

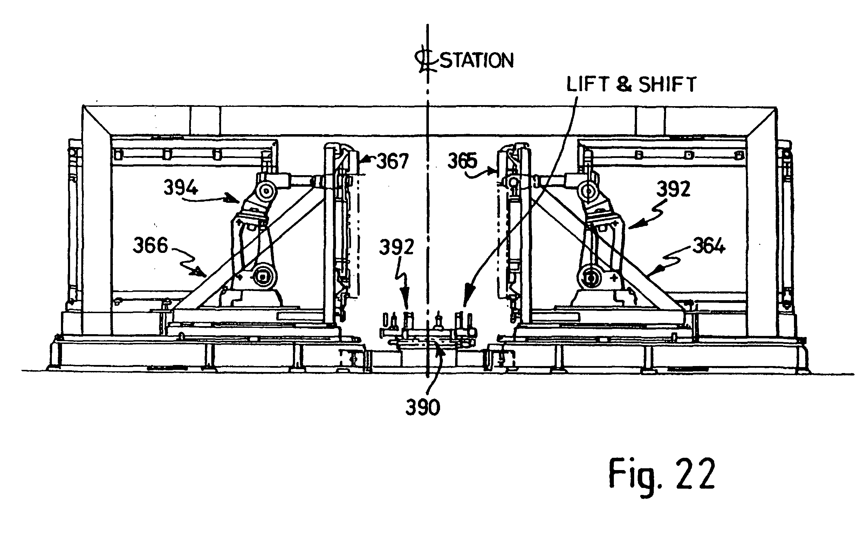

Referring to Figure 22, the tooling from the rack 382 is shown at 365 and tooling retrieved from rack 388 on carousel 354 is shown at 367 mounted on the gate support 366.

Intermediate the two supports 364 and 366 and at low level, is an underbody tooling transfer conveyor generally designated 390. Tooling for one floor tray is generally designated by reference numeral 392. By arranging different tooling for another floor tray (not shown) displaced from the tooling 392 on the transfer conveyor 390, so one or the other of the two sets of floor tray tooling can be brought into play by appropriate operation of the underbody tooling transfer conveyor 390. Typically the latter lifts as it shifts so that whereas the tooling not in use is at a low level, the tooling which is required is elevated into the position shown in Figure 22 as it enters the framing station and is moved in position by the transfer conveyor 390.

Typically single point geometry is utilised for holding the floor tray in position using location pins and clamps.

Also visible in Figure 22 are two robots 392 and 394 which serve to collect the gates such as 365 and 367 and position them relative to the underbody tooling transfer conveyor. The robots advantageously may pivot about a vertical axis so that the forward arms can be moved so as to engage a leading end of a tooling gate such as is located on racks 382 or 386, so as to slide the tooling off the rack and onto the rail of the support such as 364 or 366. Likewise in the case of a tooling gate already located on the supports 364 or 366, the robots may be pivoted in a similar sense about a vertical axis so as initially to shift the tooling gate such as 365 or 367 towards an empty rail and rack on one of the carousels as appropriate. Drive means on the carousel and associated with the empty rail/rack can then take over to retrieve the tooling gate and locate it in position on the rack on the carousel as required.

The gate supports 364 and 366 operate substantially in the same way as those described in relation to Figures 1 to 4 and in each case the tooling gate such as 365 and 367 is initially located in position by a sliding movement and thereafter by a vertical shift using a lifting device similar to that designated by 120, as described in relation to Figure 4 et seq. Such devices are visible at 394 and 396 respectively.

The robots 392 and 394 can be disengaged from the tooling 365 and 367 once the latter has been positioned on the support frames 364 and 366 in the manner described hereinbefore in relation to Figures 4 et seq and thereafter can be used to manipulate the welding tools or other devices or can be utilised to grip edges of the side panels or roof panels, or both, by protruding through appropriate apertures in the tooling gate 365 or 367.

In the arrangements shown in Figures 20 to 22, advantage has been taken of the fact that it is not necessary to move the gate supports 364 and 366 by any significant distance rearwardly along their tracks formed by the rails 370, 372 and 374, 376 respectively. To this end the tracks are significantly shorter in length than those shown in Figure 18.

Since in this arrangement it is no longer necessary to move the gate supports 364 and 366 through any significant distance, the time required to align the gate rails on the supports with the foremost rails of the carousels (such as 382 and 386 in the case of carousels 348 and 350) is very much reduced, and transfer of a tooling gate from support 368 onto a vacant rail such as 386, and new tooling from a rail such as 382 onto the support and movement of the support 364 back into position can be accommodated within the time required to shift a completed fabrication from framing station 368 into the next position on the transfer line at 398 in the direction denoted by arrow 400 in Figure 20. Since the process operates in synchronism, this is the same as the time required to shift a set of parts which are to be welded at the framing station from the preceding station 402 in Figure 20 into the framing station 368 and it will be seen that by synchronising the arrival of side panels and appropriate floor trays and roofs at the position 402 and 368, and selecting appropriate tooling from one or other of the rails on the carousels, up to four different models or derivatives can be manufactured within the framing station 368, without any interruption in the transfer sequence. Thus any one of four models or derivatives can be assembled using appropriate tooling in the framing station by simply demounting and mounting the appropriate tooling on the supports 364 and 366 as each welded fabrication is transferred out of the station and a new set of parts are delivered to the framing station.

Transfer speeds of 60 units per hour are believed to be achievable with a completely random sequence of models or derivatives along the line.

Although in theory four such models or derivatives can be accommodated, in practice most lines are set up to produce one or another of two models or derivatives and in this event only two sets of tooling are required on each side of the framing station. In this case there appears to be 100% redundancy in the arrangement shown in Figure 20. However by making two identical sets of tooling for each of the derivatives and mounting the two identical tooling sets on each of the carousels, the further advantages obtained is that whilst four of the tooling sets are utilised in pairs to produce one or the other of the two models or derivatives, the other four sets of tooling are located at 404, 406, 408 and 410 respectively and as such each is readily available for maintenance, repair, alteration or even a complete changeover to provide for a new tooling set altogether, so that transition from one model to another or from one derivative to another can be effected without any downtime.

A particular advantage of such a system is the facility by which prototype tooling can be introduced onto two of the outboard racks such as 404 and 410, and after rotation of the two carousels 348 and 354, the present tooling can be demounted and the prototype tooling mounted and presented to opposite sides of the framing station. If in synchronism prototype side panels for a new model or derivative have been supplied and to the framing station, the prototype fabrication can be welded and then transferred down the line between fabrications of existing models or derivatives, for checking to determine whether the prototype tooling is satisfactory or needs to be changed. This facility is of considerable value when proving the tooling for a new prototype, and with the facility to computer control the position of the welding robots, so the prototyping associated with a model change or new derivative can be greatly simplified.

## Claims

1. A vehicle body framing station comprising a plurality of racks (48-62) on which tooling sub-frames (gates 64-80) are stored, the racks being located adjacent a path which extends away from the side of the framing station, and a gate support assembly (28, 30) movable along the path towards and away from the framing station, so that it can receive a tooling gate thereon from one of the racks and be moved into the framing station into a working position where the tooling (26) can receive a side panel to facilitate the fabrication of a motor vehicle body in the framing station, **characterised in that** each rack (48-62) includes a high level rail (50), and each tooling gate (64-80) includes sliding means (108) adapted to engage the high level rail to carry and support the gate thereon and permit lateral movement thereof relative to the rack, movement of the gate support assembly (28, 30) along the path enabling a corresponding rail (110) thereon to be aligned with the rail of one of the racks to enable a tooling gate (78) carried by the latter to be moved onto the support assembly or from the latter onto the rack.

2. A framing station as claimed in claim 1, wherein both of the gates which make up opposite sides of the framing station are carried by the support assembly, and racks on one side of the path are used to store tooling gates for use on one side of the framing station, and those on the other side of the path are used to store tooling gates for use on the opposite side of the framing station.

3. A framing station as claimed in claim 1 or claim 2, further comprising lifting and location means (120) on the support frame to lift the tooling gate off the upper rail so that the weight of the gate is no longer carried by the upper rail but instead is carried by the location means.

4. A framing station as claimed in claim 3, wherein upper and lower regions of the gate include protruding supports, integrally formed therewith or rigidly attached thereto, the upper of which can be positively engaged by upwardly directed upper pins (130) carried by the upright support frame (28), and the lower of which comprises upwardly directed lower pins (122) which can engage brackets (126) also carried by the support frame, at least one of the engagements having a centering action on the pin engaged therein.

5. A framing station as claimed in claim 4, wherein upward movement of the upper pins (130) is possible relative to the support frame to lift the gate clear of the rail to locate precisely and accurately relative to the upright support frame (28) and in doing so the lower pins (122) are lifted into engagement with the lower brackets carried by the support frame.

6. A framing station as claimed in claim 5, further comprising a mechanism for moving the upwardly directed upper pins (130) relative to the upright support frame comprising a slidable member (136) having an inclined plane surface (148) engaging a surface (150) of each pin (130) and movement of the sliding member (and therefore its inclined planes) relative to the pin, moves the latter upwardly.

7. A framing station as claimed in claim 6, wherein sliding movement of the said slidable member is achieved by means of a pneumatic ram (134) operated by compressed air.

8. A framing station as claimed in any one of the preceding claims, wherein the parts which make up the framing station are located on a base structure which is supported by a firm foundation to enable the tooling gates to be located accurately both horizontally and vertically.

9. A framing station as claimed in claim 8, wherein the gate support assembly slides on one or more low level rails (32, 34) which extend along or comprise the path from the side of the framing station.

10. A framing station as claimed in any one of the preceding claims further comprising means for changing the floor tray tooling.

11. A framing station as claimed in claim 10, further comprising conveyor means (390) below the framing station which carries different sets of tooling to accommodate different floor trays (392) and means is provided for operating the conveyor to position one or another of the different sets of tooling in the base of the framing station as required.

12. A framing station as claimed in claim 2, wherein the two gates for carrying side panel tooling are both carried by a single gate support and are movable along a path into and out of the framing station as a single unit from one side only of the framing station and different floor tray tooling sets are located on the opposite side of the framing station for movement into and out of the base region thereof as required.

13. A framing station as claimed in claim 12, wherein the different sets of floor tray tooling are racked relative to the second path which extends away from the framing station on the said opposite side thereof, and further conveying means extends along the second path to pick up and place the floor tray tooling as required.

14. A framing station as claimed in claim 12, wherein the different sets of floor tray tooling are located around a flat rotatable platform or carousel, so as to be capable of being positioned in turn in registry with the base of the framing station by simply rotating the carousel until the selected tooling is positioned in the framing station.

15. A framing station as claimed in claim 14, further comprising means for elevating a floor tray tooling set into an operating position in the framing station from the storage position on the carousel so that transfer of tooling into and out of the framing station can be effected at low level so as not to interfere with the side panel tooling gates and/or transfer line upstream and downstream of the framing station.

## Patentansprüche

1. Montagestation für Fahrzeug-Karosserien mit einer Vielzahl von Gestellen (48 - 62), auf denen Werkzeug-Zwischenrahmen (Gatter 64 - 80) gespeichert sind, wobei die Gestelle in der Nähe eines Pfades angeordnet sind, der sich von der Seite der Montagestation weg bewegt, und einer Gatter-Abstützvorrichtung (28, 30), die längs des Pfades auf die Montagestation zu und von ihr weg verschiebbar ist, so dass sie ein Werkzeug-Gatter an der Station von einem der Gestelle aufnehmen und in die Montagestation in eine Arbeitsposition bewegt werden kann, in der die Werkzeuge (26) eine Seitentafel aufnehmen können, um die Herstellung einer Motorfahrzeug-Karosserie in der Montagestation zu vereinfachen, **dadurch gekennzeichnet, dass** jedes Gestell (48 - 62) eine hohe Schiene (50) und jedes Werkzeuge-Gatter (64 - 80) eine Gleitvorrichtung (108) aufnimmt, die mit der hohen Schiene in Eingriff bringbar ist, um das Gatter zu tragen und abzustützen, und eine seitliche Bewegung relativ zu dem Gestell ermöglicht, wobei die Bewegung der Gatter-Abstützvorrichtung (28, 30) längs des Pfades eine entsprechende Schiene (110) in die Lage versetzt, daß sie auf die Schiene eines der Gestelle ausgerichtet wird, damit ein Werkzeuge-Gatter (78), das von der Schiene aufgenommen wird, auf die Abstützvorrichtung oder von dieser auf das Gestell verschoben werden soll.

2. Montagestation nach Anspruch 1, bei der beide Gatter, die entgegengesetzte Seiten der Montagestation ausbilden, von der Abstützvorrichtung aufgenommen werden, und Gestelle auf einer Seite des Pfades zur Speicherung von Werkzeuge-Gattern für den Einsatz auf einer Seite der Montagestation verwendet werden, und Gestelle auf der anderen Seite des Pfades zur Speicherung von Werkzeuge-Gattern für die Verwendung auf der entgegengesetzten Seite der Montagestation verwendet werden.

3. Montagestation nach Anspruch 1 oder 2, mit einer Hub- und Positioniervorrichtung (120) auf dem Tragrahmen zum Abheben des Werkzeuge-Gatters von der oberen Schiene, derart, dass das Gewicht des Gatters nicht mehr von der oberen Schiene, sondern stattdessen von der Positioniervorrichtung aufgenommen wird.

4. Montagestation nach Anspruch 3, bei der obere und untere Bereiche des Gatters vorstehende Stützen aufweisen, die einteilig damit ausgebildet oder starr daran befestigt sind, wobei die obere Stütze positiv von einem nach oben gerichteten oberen Bolzen (130), der von dem aufrechten Stützrahmen (28) aufgenommen wird, beaufschlagt werden kann, und die untere Stütze nach oben gerichtete untere Bolzen (122) aufweist, die mit Halterungen (126) in Eingriff kommen, die ebenfalls von dem Tragrahmen aufgenommen werden, und wobei mindestens eine der Eingriffsvorrichtungen eine zentrierende Wirkung auf den darin beaufschlagten Bolzen ausübt.

5. Montagestation nach Anspruch 4, bei der eine nach oben gerichtete Bewegung der oberen Bolzen (130) relativ zu dem Tragrahmen durchführbar ist, um das Gatter von der Schiene abzuheben, damit eine präzise und exakte Positionierung relativ zu dem aufrechten Tragrahmen (28) ermöglicht wird und dabei die unteren Bolzen (122) in Eingriff mit den unteren Halterungen, die von dem Tragrahmen aufgenommen werden, angehoben werden.

6. Montagestation nach Anspruch 5, mit einem Mechanismus zum Verschieben der nach oben gerichteten oberen Bolzen (130) gegenüber dem aufrechten Tragrahmen, wobei ein Gleit-Bauteil (136) mit einer geneigten, ebenen Fläche (148) in Eingriff mit einer Oberfläche (150) eines jeden Bolzens (130) kommt und eine Verschiebung des Gleitbauteiles (und damit der geneigten Ebenen) relativ zu dem Bolzen diesen Bolzen nach oben verschiebt.

7. Montagestation nach Anspruch 6, bei der eine Gleitbewegung des Gleitbauteiles mit Hilfe eines pneumatischen Druckkolbens (134), der durch komprimierte Luft betätigt wird, vorgenommen wird.

8. Montagestation nach einem der vorausgehenden Ansprüche, bei der die Teile, diedie Montagestation aausbilden, auf einem Unterbau angeordnet sind, der durch ein festes Fundemant abgestützt ist, damit die Werkzeug-Gatter exakt sowohl in horizontaler als in vertikaler Richtung positionierbar sind.

9. Montagestation nach Anspruch 8, bei der die Gatter-Stützvorrichtung auf einer oder mehreren niedrigen Schienen (32, 34) gleitet, die sich längs des Pfades erstrecken oder den Pfad darstellen, der von der Seite der Montagestation ausgeht.

10. Montagestation nach einem der vorausgehenden Ansprüche, mit einer Vorrichtung zum Wechseln der Bodenwannen-Werkzeuge.

11. Montagestation nach Anspruch 10, mit einer Fördervorrichtung (390) unterhalb der Montagestation, die unterschiedliche Sätze von Werkzeugen aufninnt, um unterschiedliche Bodenwannen (392) anzupassen, und mit einer Vorrichtung zum Betreiben des Förderers, um einen der unterschiedlichen Sätze von Werkzeugen in der Basis der Montagestation in der erforderlichen Weise zu positionieren.

12. Montagestation nach Anspruch 2, bei der die beiden Gatter zum Tragen der Seitentafel-Werkzeuge beide von einem einzelnen Gatter-Stützbock aufgenommen werden und längs eines Pfades in die und aus der Montagestation als eine einzige Einheit von nur einer Seite der Montagestation verschiebbar sind, und unterschiedliche Bodenwannen-Werkzeugsätze auf der gegenüberliegenden Seite der Montagestation zum Verschieben in den und aus dem Basisbereich in der erforderlichen Weise angeordnet sind.

13. Montagestation nach Anspruch 12, bei der die unterschiedlichen Sätze von Bodenwannen-Werkzeugen relativ zu dem zweiten Pfad in ein Gestell gelegt werden, das sich von der Montagestation auf der entgegengesetzten Seite vin der Montagestation weg erstreckt, und eine weitere Fördervorrichtung längs des zweiten Pfades angeordnet ist, um in der erforderlichen Weise die Bodenwannen-Werkzeuge aufzunehmen und zu platzieren.

14. Montagestation nach Anspruch 12, in der die unterschiedlichen Sätze von Bodenwannen-Werkzeugen um eine flache drehbare Plattform oder ein Karussel herum angeordnet sind, das der Reihe nach in Deckung mit der Basis der Montagestation positioniert werden kann, indem das Karussel einfach gedreht wird, bis die ausgewählten Werkzeuge in der Montagestation positioniert sind.

15. Montagestation nach Anspruch 14, mit einer Vorrichtung zum Anheben eines Bodenwannen-Werkzeugsatzes in eine Betriebsposition in der Montagestation aus der Speicherposition auf dem Karussel, so dass eine Übergabe von Werkzeugen in die und aus der Montagestation auf einem niedrigen Pegel erreicht werden kann, damit eine Beeinträchtigung mit den Seitentafel-Werkzeuggattem und/oder einer Übergabestrecke stromaufwärts und stromabwärts in bezug auf die Montagestation nicht stattfinden kann.

## Revendications

1. Poste d'assemblage de caisses de véhicules comprenant une pluralité de râteliers (48 - 62) sur lesquels sont stockés des sous-cadres d'outillage (supports 64 - 80), les râteliers étant adjacents à un parcours partant du côté du poste d'assemblage, et un ensemble de soutien des supports (28, 30) mobile le long du parcours menant au poste d'assemblage et en partant, de sorte qu'il puisse recevoir un support d'outillage sur celui-ci depuis l'un des râteliers et être déplacé dans le poste d'assemblage dans une position de travail où l'outillage (26) peut recevoir un panneau latéral pour faciliter la fabrication d'une caisse de véhicule à moteur dans le poste d'assemblage, **caractérisé en ce que** chaque râtelier (48 - 62) comporte un rail de haut niveau (50), et chaque support d'outillage (64 - 80) comporte un moyen coulissant (108) prévu pour engager le rail de haut niveau pour porter et soutenir le support sur celui-ci et permettre le mouvement latéral de celui-ci par rapport au râtelier, le mouvement de l'ensemble de soutien des supports (28, 30) le long du parcours permettant à un rail correspondant (110) sur celui-ci de s'aligner avec le rail de l'un des râteliers pour permettre à un support d'outillage (78) porté par ce dernier d'être déplacé sur l'ensemble de soutien ou depuis celui-ci sur le râtelier.

2. Poste d'assemblage selon la revendication 1, dans lequel les deux supports qui constituent des côtés opposés du poste d'assemblage sont portés par l'ensemble de soutien, et les râteliers d'un côté du parcours sont utilisés pour stocker des supports d'outillage à utiliser d'un côté du poste d'assemblage, et ceux de l'autre côté du parcours sont utilisés pour stocker des supports d'outillage à utiliser du côté opposé du poste d'assemblage.

3. Poste d'assemblage selon la revendication 1 ou la revendication 2, comprenant en outre un moyen de levage et de positionnement (120) sur le cadre de soutien pour soulever le support d'outillage hors du rail supérieur de sorte que le poids du support ne soit plus supporté par le rail supérieur mais par le moyen de positionnement.

4. Poste d'assemblage selon la revendication 3, dans lequel des régions supérieure et inférieure du support incluent des soutiens saillants, formés intégralement avec lui ou attachés rigidement avec lui, dont le soutien supérieur peut être engagé positivement par des broches supérieures (130) dirigées vers le haut portées par le cadre de soutien vertical (28), et dont le soutien inférieur comprend des broches inférieures (122) dirigées vers le haut qui peuvent engager des fixations (126) également portées par le cadre de soutien, au moins l'un des engagements ayant une action de centrage de la broche engagée dedans.

5. Poste d'assemblage selon la revendication 4, dans lequel le mouvement vers le haut des broches supérieures (130) est possible par rapport au cadre de soutien pour lever le support au-dessus des rails pour effectuer un positionnement précis et exact par rapport au cadre de soutien vertical (28) et ce faisant, les broches inférieures (122) sont soulevées en engagement avec les fixations inférieures portées par le cadre de soutien.

6. Poste d'assemblage selon la revendication 5, comprenant en outre un mécanisme pour déplacer les broches supérieures dirigées vers le haut (130) par rapport au cadre de soutien vertical comprenant un organe coulissant (136) ayant une surface plane inclinée (148) engageant une surface (150) de chaque broche (130) et le mouvement de l'organe coulissant (et donc de ses plans inclinés) par rapport à la broche déplace cette dernière vers le haut.

7. Poste d'assemblage selon la revendication 6, dans lequel le mouvement coulissant dudit organe coulissant est réalisé au moyen d'un vérin pneumatique (134) actionné par de l'air comprimé.

8. Poste d'assemblage selon l'une quelconque des revendications précédentes, dans lequel les parties qui constituent le poste d'assemblage sont situées sur une structure de base qui est soutenue par une fondation solide pour permettre aux supports d'outillage d'être positionnés précisément horizontalement et verticalement.

9. Poste d'assemblage selon la revendication 8, dans lequel l'ensemble de soutien des supports glisse sur un ou plusieurs rails de niveau bas (32, 34) qui s'étendent le long du parcours ou comprennent le parcours depuis le côté du poste d'assemblage.

10. Poste d'assemblage selon l'une quelconque des revendications précédentes, comprenant en outre un moyen pour changer l'outillage du plateau au sol.

11. Poste d'assemblage selon la revendication 10, comprenant en outre un moyen de transporteur (390) en dessous du poste d'assemblage qui porte des jeux d'outillage différents pour loger des plateaux au sol différents (392) et un moyen est prévu pour faire fonctionner le transporteur de manière à ce qu'il positionne l'un ou l'autre des différents jeux d'outillage dans la base du poste d'assemblage, comme requis.

12. Poste d'assemblage selon la revendication 2, dans lequel les deux supports pour porter l'outillage du panneau latéral sont tous deux portés par un soutien de support unique et sont déplaçable le long d'un parcours dans et hors du poste d'assemblage sous la forme d'une seule unité depuis un côté seulement du poste seule unité depuis un côté seulement du poste d'assemblage et différents jeux d'outillage de plateau de sol sont situés du côté opposé du poste d'assemblage afin de se déplacer vers et hors de la région de base de celui-ci comme requis.

13. Poste d'assemblage selon la revendication 12, dans lequel les différents jeux d'outillage de plateau de sol sont mis en râtelier par rapport au deuxième parcours qui part du poste d'assemblage dudit côté opposé de celui-ci, et un moyen de transport supplémentaire s'étend le long du deuxième parcours pour saisir et placer l'outillage de plateau de sol comme requis.

14. Poste d'assemblage selon la revendication 12, dans lequel les différents jeux d'outillage de plateau de sol sont situés autour d'une plate-forme rotative plane ou carrousel, de manière à pouvoir être positionnés l'un après l'autre en alignement avec la base du poste d'assemblage simplement en tournant le carrousel jusqu'à ce que l'outillage sélectionné soit positionné dans le poste d'assemblage.

15. Poste d'assemblage selon la revendication 14, comprenant en outre un moyen pour élever un jeu d'outillage de plateau de sol dans une position de fonctionnement dans le poste d'assemblage depuis la position de stockage sur le carrousel de sorte que le transfert d'outillage dans et depuis le poste d'assemblage puisse s'effectuer à un niveau bas de manière à ne pas interférer avec les supports d'outillage de panneau latéral et/ou la ligne de transfert en amont et en aval du poste d'assemblage.
